(19) Europäisches Patentamt
European Patent Office
Office européen des brevets

(11) **EP 3 949 223 B1**

(12) **EUROPEAN PATENT SPECIFICATION**

(45) Date of publication and mention
of the grant of the patent:
**11.09.2024 Bulletin 2024/37**

(21) Application number: **20717340.2**

(22) Date of filing: **27.03.2020**

(51) International Patent Classification (IPC):
**H04L 5/00** *(2006.01)*          **H04L 27/26** *(2006.01)*

(52) Cooperative Patent Classification (CPC):
**H04L 5/0044; H04L 27/26025;** H04L 5/1469

(86) International application number:
**PCT/SE2020/050320**

(87) International publication number:
**WO 2020/204788 (08.10.2020 Gazette 2020/41)**

(54) **ALIGNING RESOURCES OF TWO RADIO ACCESS TECHNOLOGIES**

AUSRICHTUNG VON RESSOURCEN VON ZWEI FUNKZUGANGSTECHNOLOGIEN

ALIGNEMENT DE RESSOURCES DE DEUX TECHNOLOGIES D'ACCÈS RADIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2019 US 201962825859 P**

(43) Date of publication of application:
**09.02.2022 Bulletin 2022/06**

(73) Proprietor: **Telefonaktiebolaget LM Ericsson
(publ)
164 83 Stockholm (SE)**

(72) Inventors:
• **MOZAFFARI, Mohammad
San Jose, California 95134 (US)**
• **WANG, Yi-Pin Eric
Fremont, California 94539 (US)**
• **AFSHANG, Mehrnaz
San Jose, California 95134 (US)**
• **EVERAERE, Dominique
184 91 Åkersberga (SE)**

(74) Representative: **Ericsson
Patent Development
Torshamnsgatan 21-23
164 80 Stockholm (SE)**

(56) References cited:
**US-A1- 2017 141 901**

• **NOKIA ET AL: "Coexistence of NB-IoT with NR",
vol. RAN WG1, no. Athens, Greece; 20190225 -
20190301, 15 February 2019 (2019-02-15),
XP051599659, Retrieved from the Internet
<URL:http://www.3gpp.org/ftp/tsg%5Fran/WG1
%5FRL1/TSGR1%5F96/Docs/R1%2D1901966%2
Ezip> [retrieved on 20190215]**
• **ERICSSON: "NB-IoT and NR coexistence:
Channel raster and RB alignment", vol. RAN WG4,
no. Athens, Greece; 20190225 - 20190301, 15
February 2019 (2019-02-15), XP051605996,
Retrieved from the Internet
<URL:http://www.3gpp.org/ftp/tsg%5Fran/WG4
%5FRadio/TSGR4%5F90/Docs/R4%2D1901400%
2Ezip> [retrieved on 20190215]**
• **ERICSSON: "NR and NB-IoT Coexistence", vol.
RAN WG1, no. Chengdu, China; 20181008 -
20181012, 29 September 2018 (2018-09-29),
XP051517612, Retrieved from the Internet
<URL:http://www.3gpp.org/ftp/tsg%5Fran/WG1
%5FRL1/TSGR1%5F94b/Docs/R1%2D1810197%
2Ezip> [retrieved on 20180929]**

**Description**

TECHNICAL FIELD

Particular embodiments relate to wireless communication, and more specifically to aligning resources of two radio access technologies, such as efficient placement of narrowband Internet-of-Things (NB-IoT) inside fifth generation (5G) new radio (NR) in time division duplex (TDD) bands.

BACKGROUND

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Network operators are rolling out narrowband Internet-of-Things (NB-IoT) networks at a fast pace. Within the next few years a massive number of devices may be connected to the networks, addressing a wide spectrum of IoT use cases. In the next few years, 3.5 billion wide-area IoT devices may be connected to cellular IoT networks.

Because IoT devices may have a 10-year battery lifetime, many of the IoT devices will remain in service years after deployment. During the lifetime of these deployed IoT devices, many networks will undergo long term evolution (LTE) to fifth generation (5G) new radio (NR) migration.

A smooth migration without service interruption to deployed IoT devices is extremely important to mobile network operators (MNO). Furthermore, a migration solution that ensures superior radio resource utilization efficiency and superior coexistence performance between NB-IoT and NR is highly desirable. In this regard, the ability of NR resource reservation in time domain and frequency domain can facilitate the coexistence of NR and NB-IoT.

There currently exist certain challenges with embedding an NB-IoT carrier inside a 5G NR carrier in a time division duplex (TDD) band. In general, if the NB-IoT carrier can be placed arbitrarily then this would satisfy its channel raster requirement. But this type of flexibility requires a large guard band to be reserved within an NR carrier to prevent interference between the two systems.

The document NOKIA ET AL: "Coexistence of NB-IoT with NR", 3GPP DRAFT R1-1901966, 15 February 2019 (2019-02-15), proposes techniques to facilitate the coexistence of NB-IoT with NR.

SUMMARY

As described above, certain challenges currently exist with embedding a first radio access technology (RAT) within a second RAT (e.g., embedding an NB-IoT carrier inside a 5G NR carrier in a time division duplex (TDD) band). Certain aspects of the present disclosure and their embodiments may provide solutions to these or other challenges.

For example, particular embodiments described herein include solutions for improved coexistence of a narrowband Internet-of-Things (NB-IoT) carrier embedded inside a fifth generation (5G) new radio (NR) carrier in a time division duplex (TDD) band.

Some embodiments determine the placement of an NB-IoT carrier within an NR carrier that ensures orthogonality between NR and NB-IoT. For example, some embodiments identify the locations of NB-IoT carrier for which the NR and NB-IoT subcarriers can be aligned. Moreover, along with subcarrier alignment, resource block (RB) alignment enhances the resource efficiency thus reducing overhead in the NB-IoT and NR coexistence. Analysis of the subcarrier and RB alignments in NR and NB-IoT systems derives the possible locations of NB-IoT carrier for which both subcarrier and RB alignments are met in TDD case.

Particular embodiments include identification of the RB indexes where RB alignment is possible for NR and NB-IoT coexistence. Particular embodiments include a list of RB indexes where the NB-IoT carrier can be deployed for various NR system bandwidths with specific number of RBs.

Particular embodiments address the subcarrier grids alignment as well as RB alignment in NR and NB-IoT coexistence in TDD bands (e.g., n41, n77, n78, n79) when channel raster is not based on 100 kHz. In particular, some embodiments focus on TDD bands with subcarrier spacing (SCS)-based channel raster. For 15 kHz SCS, the channel raster is 15 kHz. For various NR system bandwidths and NR channel raster locations in such bands, particular embodiments determine the indexes of NR RBs which can be used for deploying NB-IoT

Particular embodiments effectively deploy NB-IoT in coexistence with NR operating in TDD with SCS-based channel raster (i.e., when channel raster is not based on 100 kHz). More specifically, particular embodiments address the problems of subcarrier grids alignment and RB alignment, which are key issues in the coexistence of NR and NB-IoT. When deploying NB-IoT inside an NR band, particular embodiments determine the best locations of NB-IoT carrier where both subcarrier and RB alignments are achieved.

The invention is defined by the appended claims.

Certain embodiments may provide one or more of the following technical advantages. For example, some embodiments effectively deploy NB-IoT in coexistence with NR using TDD with SCS-based channel raster (i.e., when channel raster is not based on 100 kHz). More specifically, particular embodiments address the problems of subcarrier grids alignment and RB alignment, which are key issues in the coexistence of NR and NB-IoT. When deploying NB-IoT inside an NR band, particular embodiments determine optimal locations of NB-IoT carrier to achieve both subcarrier and RB alignments.

BRIEF DESCRIPTION OF THE DRAWINGS

For a more complete understanding of the disclosed embodiments and their features and advantages, reference is now made to the following description, taken in conjunction with the accompanying drawings, in which:

FIGURE 1 is a frequency diagram illustrating raster steps for NR and NB-IoT in TDD band 41;
FIGURE 2 is a frequency diagram illustrating an example raster grid with a 100 kHz step;
FIGURE 3 is a frequency diagram illustrating alignment of NB-IoT center with the center of an NR RB;
FIGURE 4 is a frequency diagram illustrating RB indexes relative to the middle NR RBs;
FIGURE 5 is a frequency diagram illustrating the location of NR channel raster and the RB center for an even number of NR RBs;
FIGURE 6 is a frequency diagram illustrating the location of NR channel raster and the RB center for an odd number of NR RBs;
FIGURE 7 is a block diagram illustrating an example wireless network;
FIGURE 8 illustrates an example user equipment, according to certain embodiments;
FIGURE 9 is flowchart illustrating an example method in a wireless device, according to certain embodiments;
FIGURE 10 is a flowchart illustrating an example method in a network node, according to certain embodiments;
FIGURE 11 illustrates a schematic block diagram of a wireless device and network node in a wireless network, according to certain embodiments;
FIGURE 12 illustrates an example virtualization environment, according to certain embodiments;
FIGURE 13 illustrates an example telecommunication network connected via an intermediate network to a host computer, according to certain embodiments;
FIGURE 14 illustrates an example host computer communicating via a base station with a user equipment over a partially wireless connection, according to certain embodiments;
FIGURE 15 is a flowchart illustrating a method implemented, according to certain embodiments;
FIGURE 16 is a flowchart illustrating a method implemented in a communication system, according to certain embodiments;
FIGURE 17 is a flowchart illustrating a method implemented in a communication system, according to certain embodiments; and
FIGURE 18 is a flowchart illustrating a method implemented in a communication system, according to certain embodiments.

DETAILED DESCRIPTION

As described above, certain challenges currently exist with embedding a first radio access technology (RAT) within a second RAT, such as embedding narrowband Internet-of-Things (NB-IoT) carrier inside a fifth generation (5G) new radio (NR) carrier in a time division duplex (TDD) band. Certain aspects of the present disclosure and their embodiments may provide solutions to these or other challenges.

Particular embodiments are described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

In existing Third Generation Partnership Project (3GPP) agreements regarding the coexistence of TDD NB-IoT with NR, the only TDD band used by NB-IoT and NR is band # n41. Examples used herein analyze the in-band deployment of an anchor NB-IoT carrier inside an NR carrier in TDD band n41. Note that the analysis may be applied to any other TDD bands (e.g., n77, n78, n79) with SCS-based channel raster.

Particular examples may include a downlink (DL) coexistence scenario in which both NR and NB-IoT have 15 kHz subcarrier spacing (SCS). Because NR and NB-IoT adopt orthogonal frequency-division multiple access (OFDMA) in downlink, it is possible to achieve the subcarrier orthogonality between these systems. The possible NR system bandwidths for 15 kHz SCS in band 41 are currently: 10, 15, 20, 40, and 50 MHz. The bandwidth for NB-IoT carrier is 180 kHz, which corresponds to one NR resource block.

For an efficient coexistence between NR and NB-IoT, particular embodiments deploy the NB-IoT carrier (i.e., one RB) inside the NR carrier such that: 1) inter-subcarrier interference between two systems is avoided (e.g., aligning the subcarrier grids between NR and NB-IoT); and 2) the minimum number of NR resources are reserved for NB-IoT (e.g., aligning the NB-IoT RB with an NR RB so that only one NR RB needs to be reserved for NB-IoT). Note that, if the NB-IoT carrier is not efficiently deployed, two NR RBs may need to be reserved, which degrades NR resource utilization.

With respect to the embodiments described herein, the NR raster defines a subset of NR radio frequency (RF) reference frequencies that can be used to identify the RF channel position in the uplink and downlink. The NR RF reference frequency for an RF channel maps to a resource element (e.g., a subcarrier) on the carrier. Hereinafter, the NR channel raster is referred to as a point on the raster grid which defines the NR RF reference frequency.

Similarly, the NB-IoT raster defines a subset of NB-IoT RF reference frequencies that can be used to identify the RF channel position in the uplink and downlink. The NB-IoT RF reference frequency for an RF channel maps to a mid-point between the middle two subcarriers on the NB-IoT carrier. Hereinafter, the NB-IoT channel raster is referred to as a point on the raster grid which defines the NB-IoT RF reference frequency.

One NR RB in frequency domain consists of 12 subcarriers. The number of NR resource blocks may be denoted by $N_{nr}$. The NR resource blocks are indexed from 0 to ($N_{nr}$ - 1). The NR subcarriers may be indexed relative to the NR raster. Thus, the NR raster is located on subcarrier with index 0.

The NB-IoT carrier center frequency is denoted by $F_{nb}$. The NB-IoT channel raster is 100 kHz based. For NR carriers with an even number of RB ($N_{nr}$), the channel raster is located at subcarrier index #0 in RB with index $\frac{N_{nr}}{2}$. For NR carriers with an odd number of RB, channel raster located at subcarrier index #6 in RB with index $(N_{nr} - 1)/2$. The NR RB that contains the NR channel raster is referred to as the middle RB.

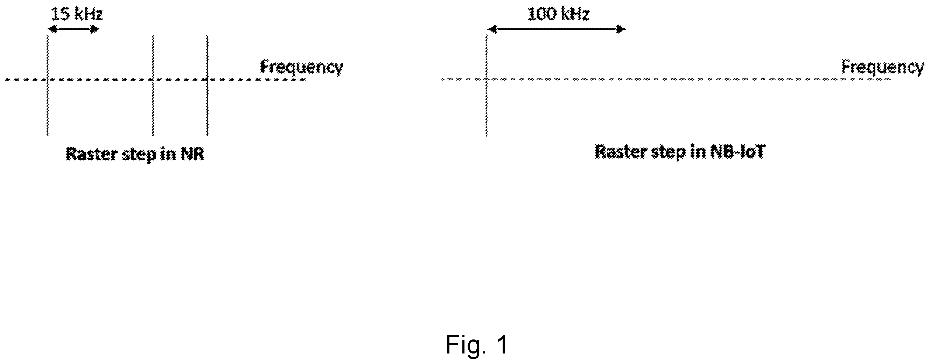

Regarding resource block (RB) alignment, in TDD band n41 the channel raster step for NB-IoT is 100 kHz, while for NR it is based on the SCS, which is 15 kHz in this example. The description of particular embodiments focuses on the case of NR carriers configured with 15 kHz subcarrier spacing. Thus, the NR channel raster frequency is given by 15$m$ [kHz], and the NB-IoT channel raster can be expressed as 100$n$ [kHz], with $m$ and $n$ being integers. An example is illustrated in FIGURE 1.

FIGURE 1 is a frequency diagram illustrating raster steps for NR and NB-IoT in TDD band 41. The horizontal axis represents frequency. As illustrated, the raster step in NR is 15 kHz and the raster step in NB-IoT is 100 kHz.

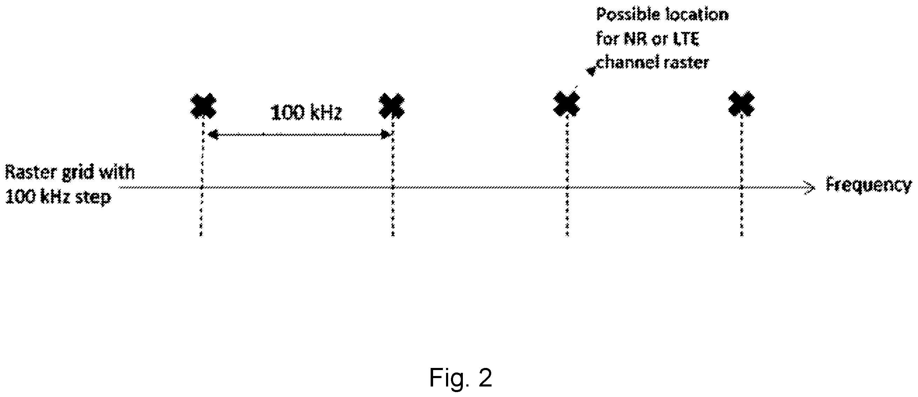

In general, while deploying a carrier (NR, LTE, NB-IoT, etc.) the channel raster requirement must be satisfied. Channel raster (or raster) represents a set of possible frequencies for placing the center of a carrier. Most cases use 100 kHz raster step, which means the center of the carrier can only be on frequencies 100*n [kHz] (e.g., 100, 200, 300 kHz,...). An example is illustrated in FIGURE 2.

FIGURE 2 is a frequency diagram illustrating an example raster grid with a 100 kHz step. The horizontal axis represents frequency. An X marks possible locations for NR or LTE channel raster.

NR can have 15 kHz channel raster for some TDD bands. For NB-IoT the channel raster is 100 kHz but an offset (2.5 or 7.5 kHz) is allowed from the 100 kHz grid. Thus, some constraints (e.g., raster) exist on placing an NB-IoT carrier (cannot place it everywhere). There are limited options for NB-IoT carrier location.

The design of NB-IoT initial access channels (e.g., NPSS, NSSS, and NPBCH) allows a raster offset of 2.5 kHz, -2.5 kHz, 7.5 kHz, or -7.5 kHz from the 100 kHz raster grid. Thus, an NB-IoT anchor carrier center can be placed at 100$n$±2.5 kHz or 100$n$±7.5 kHz, where $n$ is an integer. In NB-IoT, the downlink channel raster is located in the center of NB-IoT channel (i.e., the channel center point is located between two NB-IoT subcarriers). Raster offset of ±2.5 or ±7.5 kHz is allowed for in-band and guard-band operation modes.

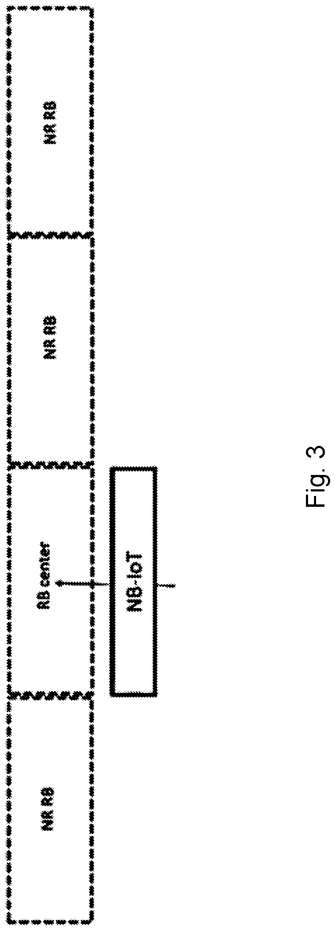

FIGURE 3 is a frequency diagram illustrating alignment of NB-IoT center with the center of an NR RB. As illustrated in FIGURE 3, to ensure both subcarrier grid and RB alignments between NR and NB-IoT, the NB-IoT carrier center is placed in the middle of an NR RB. Aligning a carrier center frequency of the NB-IoT carrier with the middle of an NR RB means that the NB-IoT carrier and NR RB have the same center frequency. Also, the location of an NB-IoT carrier center must satisfy the raster requirements. FIGURE 3 identifies the suitable NR RBs which can be used for placing an NB-IoT RB.

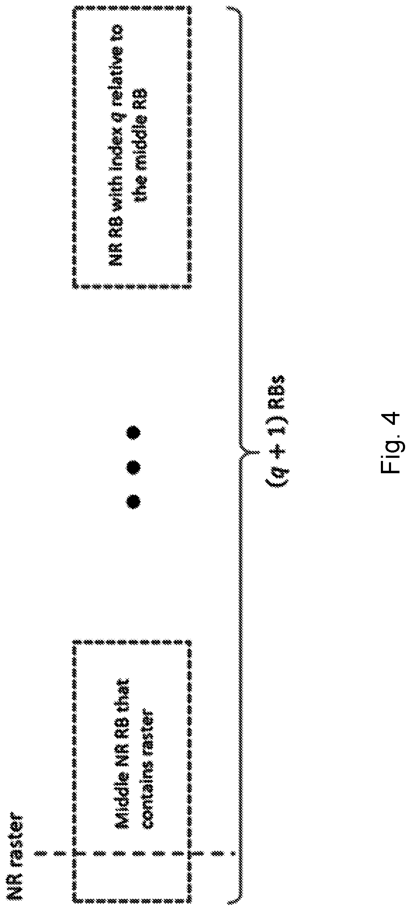

One example includes an NR carrier with $N_{nr}$ number of RB. Also, let $q$ (an integer) be the index of an RB in NR relative to the middle RB (which contains NR channel raster) which is used for placing the NB-IoT carrier. In this example, the middle RB is RB index $N_{nr}/2$ for even number of RBs, and RB index $(N_{nr} - 1)/2$ for odd number of RBs. The middle of each NR RB is between two subcarriers. A goal is to find all feasible values of $q$ (and indexes of NR RBs) that identify NR RBs which can be used for deploying NB-IoT carrier. An example is illustrated in FIGURE 4.

FIGURE 4 is a frequency diagram illustrating RB indexes relative to the middle NR RBs. Each NR RB may be identified by an index q relative to the middle RB.

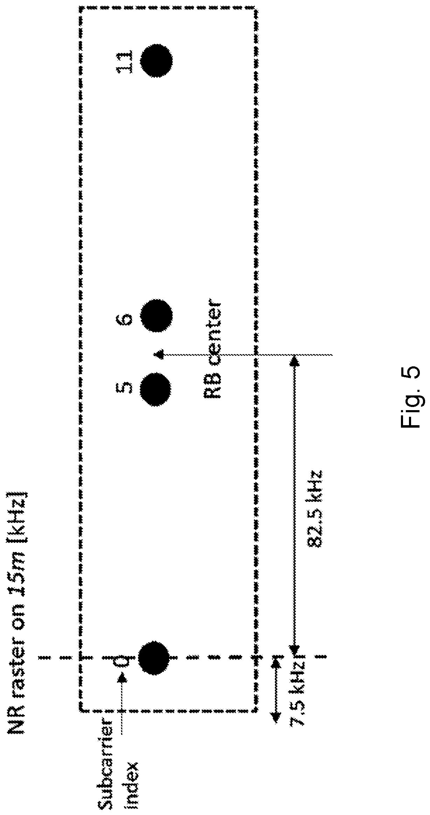

For an even number of NR RBs, the frequency of NR RB center with index q is: $F_{c,RB}$ = 15$m$ + 82.5 + 180$q$ , [$kHz$]. Note that each RB is 180 kHz in15 kHz subcarrier spacing case. An example is illustrated in FIGURE 5.

FIGURE 5 is a frequency diagram illustrating the location of NR channel raster and the RB center for an even number of NR RBs. As illustrated, the RB center is between subcarriers 5 and 6.

The NB-IoT carrier center frequency can be expressed by:

$$F_{nb} = \begin{cases} 100n - 7.5, & \text{or} \\ 100n - 2.5, & \text{or} \\ 100n + 2.5, & \text{or} \\ 100n + 7.5 \end{cases} , [kHz]$$

To ensure that the center of NB-IoT carrier is aligned with the center of an NR RB:

$$F_{c,RB} = F_{nb},$$

$$15m + 82.5 + 180q = 100n - 7.5,$$

or

$$15m + 82.5 + 180q = 100n - 2.5,$$

or

$$15m + 82.5 + 180q = 100n + 2.5,$$

or

$$15m + 82.5 + 180q = 100n + 7.5$$

Which is equivalent to:

$$36q + 3m + 15 = 20n,$$

or

$$36q + 3m + 16 = 20n,$$

or

$$36q + 3m + 17 = 20n,$$

or

$$36q + 3m + 18 = 20n$$

Considering the modulo operator represented by $z = mod(x, y)$, where $x$, $y$, and $z$ are integers, and $z$ is the remainder after the division of $x$ by $y$:

$$mod\big((-4q + 3m), 20\big) \in \{2,3,4,5\} \qquad (1)$$

The feasible values of $q$ depend on $m$. That is, q depends on the location of the NR RF reference frequency. Thus, $q$ is determined considering all possible values of $m$.

Let $r$ be the reminder of $m$ after dividing it by 20: $r = mod(m, 20)$ and $r$ can be any integer value in set $\{0,1,2,...,18, 19\}$. Solving equation (1) determines all feasible values of $q$.

Subsequently, the indexes of suitable NR RBs for placing the NB-IoT carrier are $\left(q + \frac{N_{nr}}{2}\right)$. Table 1 indicates the feasible NR RBs for deploying NB-IoT considering various locations of NR channel raster (determined by $r$). Note that the NR channel raster is located on $15m$ [kHz], and the reminder of $m$ after dividing it by 20 is $r$.

Table 1: Indexes of NR RBs used for deploying NB-IoT (even number of NR RBs).

| $r$: the remainder of $m$ after dividing it by 20 | Indexes of NR RBs used for deploying NB-IoT |
|---|---|
| 1, 8, 14, 15 | $\frac{N_{nr}}{2} - 5p,\qquad \frac{2-N_{nr}}{10} \leq p \leq \frac{N_{nr}}{10}$, $p$ is integer |
| 2, 3, 9, 16 | $\frac{N_{nr}}{2} - 5p + 1,\qquad \frac{4-N_{nr}}{10} \leq p \leq \frac{N_{nr}+2}{10}$, $p$ is integer |
| 4, 10,11,17 | $\frac{N_{nr}}{2} - 5p + 2,\qquad \frac{6-N_{nr}}{10} \leq p \leq \frac{N_{nr}+4}{10}$, $p$ is integer |
| 5, 12, 18,19 | $\frac{N_{nr}}{2} - 5p + 3,\qquad \frac{8-N_{nr}}{10} \leq p \leq \frac{N_{nr}+6}{10}$, $p$ is integer |
| 0, 6, 7, 13 | $\frac{N_{nr}}{2} - 5p + 4,\qquad \frac{10-N_{nr}}{10} \leq p \leq \frac{N_{nr}+8}{10}$, $p$ is integer |

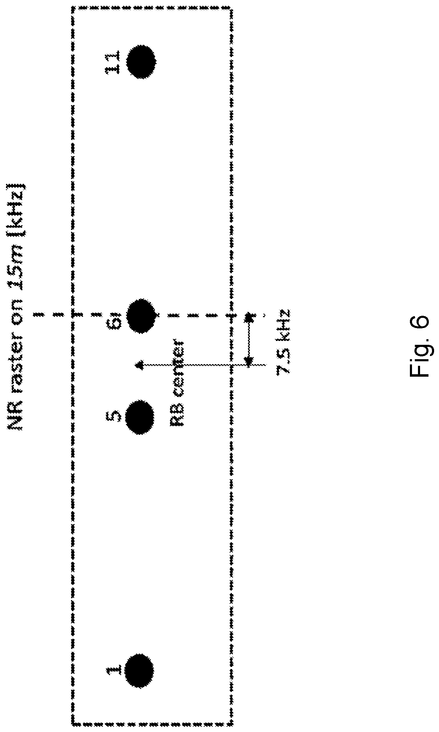

For an odd number of NR RBs, the frequency of NR RB center with index q is: $F_{c,RB} = 15m - 7.5 + 180q$, [kHz]. An example is illustrated in FIGURE 6.

FIGURE 6 is a frequency diagram illustrating the location of NR channel raster and the RB center for an odd number of NR RBS. As illustrated, the NR raster is aligned with subcarrier 6.

Following the similar analysis for the even number of NR RBs:

$$mod\big((-4q + 3m), 20\big) \in \{0,1,2,3\} \qquad (2)$$

Solving equation (2) determines all feasible values of q. Subsequently, the indexes of suitable NR RBs for placing the NB-IoT carrier are $\left(q + \frac{N_{nr}-1}{2}\right)$. Table 2 indicates the feasible NR RBs for deploying NB-IoT considering various locations of NR channel raster (determined by $r$).

Table 2: Indexes of NR RBs used for deploying NB-IoT (odd number of NR RBs).

| $r$: the remainder of $m$ after dividing it by 20 | Indexes of NR RBs used for deploying NB-IoT |
|---|---|
| 0,1,7,14 | $\frac{N_{nr}-1}{2} - 5p,\qquad \frac{1-N_{nr}}{10} \leq p \leq \frac{N_{nr}-1}{10}$, $p$ is integer |

(continued)

| $r$: the remainder of $m$ after dividing it by 20 | Indexes of NR RBs used for deploying NB-IoT |
|---|---|
| 2,8,9,15 | $\frac{N_{nr}-1}{2} - 5p + 1, \quad \frac{3-N_{nr}}{10} \leq p \leq \frac{N_{nr}+1}{10}, \ p$ is integer |
| 3,10,16,17 | $\frac{N_{nr}-1}{2} - 5p + 2, \quad \frac{5-N_{nr}}{10} \leq p \leq \frac{N_{nr}+3}{10}, \ p$ is integer |
| 4,5,11,18 | $\frac{N_{nr}-1}{2} - 5p + 3, \quad \frac{7-N_{nr}}{10} \leq p \leq \frac{N_{nr}+5}{10}, \ p$ is integer |
| 6,12, 13,19 | $\frac{N_{nr}-1}{2} - 5p + 4, \quad \frac{9-N_{nr}}{10} \leq p \leq \frac{N_{nr}+7}{10}, \ p$ is integer |

Based on the analysis above, feasible locations of an NB-IoT RB for various NR system bandwidths are given below. The number of resources blocks for each NR system bandwidth for 15 kHz subcarrier spacing is given in Table 3.

Table 3: NR system bandwidths and number of resource blocks for 15 kHz subcarrier spacing.

| NR system bandwidth | Number of NR resource blocks ($N_{nr}$) |
|---|---|
| 10 MHz | 52 |
| 15 MHz | 79 |
| 20 MHz | 106 |
| 40 MHz | 216 |
| 50 MHz | 270 |

Table 4: Indexes of NR RBs used for deploying NB-IoT (10 MHz NR bandwidth).

| $r$: the remainder of $m$ after dividing it by 20 | Indexes of NR RBs used for deploying NB-IoT |
|---|---|
| 1, 8, 14, 15 | 1, 6, 11, 16, 21, 26, 31, 36, 41, 46, 51 |
| 2, 3, 9,16 | 2, 7, 12, 17, 22, 27, 32, 37, 42, 47 |
| 4, 10,11,17 | 3, 8, 13, 18, 23, 28, 33, 38, 43, 48 |
| 5, 12, 18,19 | 4, 9, 14, 19, 24, 29, 34, 39, 44, 49 |
| 0, 6, 7, 13 | 0, 5, 10, 15, 20, 25, 30, 35, 40, 45, 50 |

Table 5: Indexes of NR RBs used for deploying NB-IoT (15 MHz NR bandwidth).

| $r$: the remainder of $m$ after dividing it by 20 | Indexes of NR RBs used for deploying NB-IoT |
|---|---|
| 0, 1,7,14 | 4, 9, 14, 19, 24, 29, 34, 39, 44, 49, 54, 59, 64, 69, 74 |
| 2,8,9,15 | 0, 5, 10, 15, 20, 25, 30, 35, 40, 45, 50, 55, 60, 65, 70, 75 |
| 3,10,16,17 | 1, 6, 11, 16, 21, 26, 31, 36, 41, 46, 51, 56, 61, 66, 71, 76 |
| 4,5,11,18 | 2, 7, 12, 17, 22, 27, 32, 37, 42, 47, 52, 57, 62, 67, 72, 77 |
| 6,12, 13,19 | 3, 8, 13, 18, 23, 28, 33, 38, 43, 48, 53, 58, 63, 68, 73, 78 |

Table 6: Indexes of NR RBs used for deploying NB-IoT (20 MHz NR bandwidth).

| $r$: the remainder of $m$ after dividing it by 20 | Indexes of NR RBs used for deploying NB-IoT |
| --- | --- |
| 1, 8, 14, 15 | 3, 8, 13, 18, 23, 28, 33, 38, 43, 48, 53, 58, 63, 68, 73, 78, 83, 88, 93, 98, 103 |
| 2, 3, 9,16 | 4, 9, 14, 19, 24, 29, 34, 39, 44, 49, 54, 59, 64, 69, 74, 79, 84, 89, 94, 99, 104 |
| 4, 10,11,17 | 0, 5, 10, 15, 20, 25, 30, 35, 40, 45, 50, 55, 60, 65, 70, 75, 80, 85, 90, 95, 100, 105 |
| 5, 12, 18,19 | 1, 6, 11, 16, 21, 26, 31, 36, 41, 46, 51, 56, 61, 66, 71, 76, 81, 86, 91, 96, 101 |
| 0, 6, 7, 13 | 2, 7, 12, 17, 22, 27, 32, 37, 42, 47, 52, 57, 62, 67, 72, 77, 82, 87, 92, 97, 102 |

Table 7: Indexes of NR RBs used for deploying NB-IoT (40 MHz NR bandwidth).

| $r$: the remainder of $m$ after dividing it by 20 | Indexes of NR RBs used for deploying NB-IoT |
| --- | --- |
| 1, 8, 14, 15 | 3, 8, 13, ..., 208, 213 |
| 2, 3, 9,16 | 4, 9, 14, ..., 209, 214 |
| 4, 10,11,17 | 0, 5, 10, ..., 210, 215 |
| 5, 12, 18,19 | 1, 6, 11, ... , 206, 211 |
| 0, 6, 7, 13 | 2, 7, 12, ..., 207, 212 |

Table 8: Indexes of NR RBs used for deploying NB-IoT (50 MHz NR bandwidth).

| $r$: the remainder of $m$ after dividing it by 20 | Indexes of NR RBs used for deploying NB-IoT |
| --- | --- |
| 1, 8, 14, 15 | 0, 5, 10, ..., 260, 265 |
| 2, 3, 9,16 | 1, 6, 11, ... , 261, 266 |
| 4, 10,11,17 | 2, 7, 12, ..., 262, 267 |
| 5, 12, 18,19 | 3, 8, 13, ..., 263, 268 |
| 0, 6, 7, 13 | 4, 9, 14, ..., 264, 269 |

As a particular example, for $r = 0$, $m$ is divisible by 20 and thus the NR channel raster is located on a frequency that is divisible by 15* 20 = 300 kHz. Therefore, the channel raster is located on a 100 kHz grid. In this example, the NB-IoT carrier center can be placed in the middle of NR RBs with the following indexes: 2, 7, 12, 17, 22, 27, 32, 37, 42, 47, 52, 57, 62, 67, 72, 77, 82, 87, 92, 97, 102.

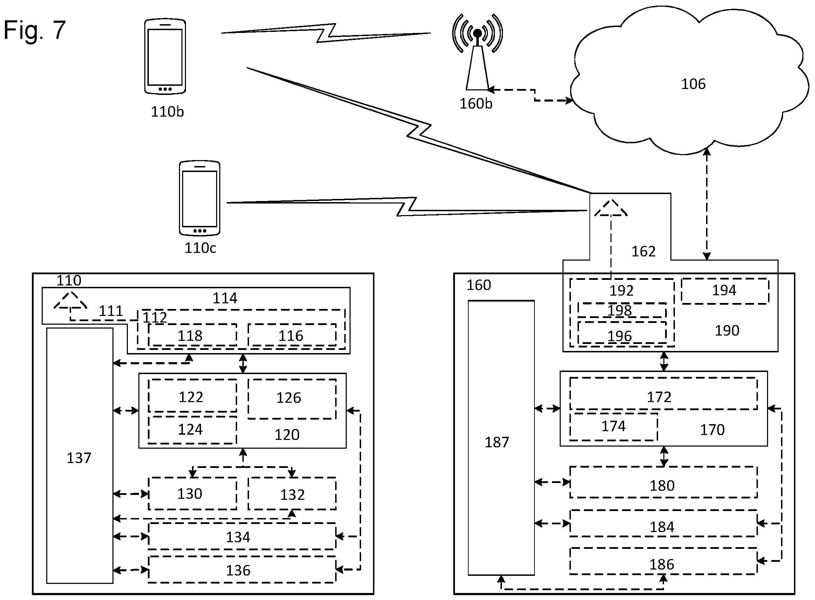

FIGURE 7 illustrates an example wireless network, according to certain embodiments. The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), New Radio (NR), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node 160 and WD 110 comprise various components described in more detail below. These components work together to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network.

Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations.

A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs.

As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In FIGURE 7, network node 160 includes processing circuitry 170, device readable medium 180, interface 190, auxiliary equipment 184, power source 186, power circuitry 187, and antenna 162. Although network node 160 illustrated in the example wireless network of FIGURE 7 may represent a device that includes the illustrated combination of hardware components, other embodiments may comprise network nodes with different combinations of components.

It is to be understood that a network node comprises any suitable combination of hardware and/or software needed to perform the tasks, features, functions and methods disclosed herein. Moreover, while the components of network node 160 are depicted as single boxes located within a larger box, or nested within multiple boxes, in practice, a network node may comprise multiple different physical components that make up a single illustrated component (e.g., device readable medium 180 may comprise multiple separate hard drives as well as multiple RAM modules).

Similarly, network node 160 may be composed of multiple physically separate components (e.g., a NodeB component and a RNC component, or a BTS component and a BSC component, etc.), which may each have their own respective components. In certain scenarios in which network node 160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node.

In some embodiments, network node 160 may be configured to support multiple radio access technologies (RATs). In such embodiments, some components may be duplicated (e.g., separate device readable medium 180 for the different RATs) and some components may be reused (e.g., the same antenna 162 may be shared by the RATs). Network node 160 may also include multiple sets of the various illustrated components for different wireless technologies integrated into network node 160, such as, for example, GSM, WCDMA, LTE, NR, WiFi, or Bluetooth wireless technologies. These wireless technologies may be integrated into the same or different chip or set of chips and other components within network node 160.

Processing circuitry 170 is configured to perform any determining, calculating, or similar operations (e.g., certain obtaining operations) described herein as being provided by a network node. These operations performed by processing circuitry 170 may include processing information obtained by processing circuitry 170 by, for example, converting the obtained information into other information, comparing the obtained information or converted information to information stored in the network node, and/or performing one or more operations based on the obtained information or converted information, and as a result of said processing making a determination.

Processing circuitry 170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 160 components, such as device readable medium 180, network node 160 functionality.

For example, processing circuitry 170 may execute instructions stored in device readable medium 180 or in memory within processing circuitry 170. Such functionality may include providing any of the various wireless features, functions, or benefits discussed herein. In some embodiments, processing circuitry 170 may include a system on a chip (SOC).

In some embodiments, processing circuitry 170 may include one or more of radio frequency (RF) transceiver circuitry 172 and baseband processing circuitry 174. In some embodiments, radio frequency (RF) transceiver circuitry 172 and baseband processing circuitry 174 may be on separate chips (or sets of chips), boards, or units, such as radio units and digital units. In alternative embodiments, part or all of RF transceiver circuitry 172 and baseband processing circuitry 174 may be on the same chip or set of chips, boards, or units

In certain embodiments, some or all of the functionality described herein as being provided by a network node, base station, eNB, gNB or other such network device may be performed by processing circuitry 170 executing instructions stored on device readable medium 180 or memory within processing circuitry 170. In alternative embodiments, some or all of the functionality may be provided by processing circuitry 170 without executing instructions stored on a separate or discrete device readable medium, such as in a hard-wired manner. In any of those embodiments, whether executing instructions stored on a device readable storage medium or not, processing circuitry 170 can be configured to perform the described functionality. The benefits provided by such functionality are not limited to processing circuitry 170 alone or to other components of network node 160 but are enjoyed by network node 160 as a whole, and/or by end users and the wireless network generally.

Device readable medium 180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 170. Device readable medium 180 may store any suitable instructions, data or information, including a computer program, software, an application including one or more of logic, rules, code, tables, etc. and/or other instructions capable of being executed by processing circuitry 170 and, utilized by network node 160. Device readable medium 180 may be used to store any calculations made by processing circuitry 170 and/or any data received via interface 190. In some embodiments, processing circuitry 170 and device readable medium 180 may be considered to be integrated.

Interface 190 is used in the wired or wireless communication of signaling and/or data between network node 160, network 106, and/or WDs 110. As illustrated, interface 190 comprises port(s)/terminal(s) 194 to send and receive data, for example to and from network 106 over a wired connection. Interface 190 also includes radio front end circuitry 192 that may be coupled to, or in certain embodiments a part of, antenna 162.

Radio front end circuitry 192 comprises filters 198 and amplifiers 196. Radio front end circuitry 192 may be connected to antenna 162 and processing circuitry 170. Radio front end circuitry may be configured to condition signals communicated between antenna 162 and processing circuitry 170. Radio front end circuitry 192 may receive digital data that is to be sent out to other network nodes or WDs via a wireless connection. Radio front end circuitry 192 may convert the digital data into a radio signal having the appropriate channel and bandwidth parameters using a combination of filters 198 and/or amplifiers 196. The radio signal may then be transmitted via antenna 162. Similarly, when receiving data, antenna 162 may collect radio signals which are then converted into digital data by radio front end circuitry 192. The digital data may be passed to processing circuitry 170. In other embodiments, the interface may comprise different components and/or different combinations of components.

In certain alternative embodiments, network node 160 may not include separate radio front end circuitry 192, instead, processing circuitry 170 may comprise radio front end circuitry and may be connected to antenna 162 without separate radio front end circuitry 192. Similarly, in some embodiments, all or some of RF transceiver circuitry 172 may be considered a part of interface 190. In still other embodiments, interface 190 may include one or more ports or terminals 194, radio front end circuitry 192, and RF transceiver circuitry 172, as part of a radio unit (not shown), and interface 190 may communicate with baseband processing circuitry 174, which is part of a digital unit (not shown).

Antenna 162 may include one or more antennas, or antenna arrays, configured to send and/or receive wireless signals. Antenna 162 may be coupled to radio front end circuitry 192 and may be any type of antenna capable of transmitting and receiving data and/or signals wirelessly. In some embodiments, antenna 162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 162 may be separate from network node 160 and may be connectable to network node 160 through an interface or port.

Antenna 162, interface 190, and/or processing circuitry 170 may be configured to perform any receiving operations and/or certain obtaining operations described herein as being performed by a network node. Any information, data and/or signals may be received from a wireless device, another network node and/or any other network equipment. Similarly, antenna 162, interface 190, and/or processing circuitry 170 may be configured to perform any transmitting operations described herein as being performed by a network node. Any information, data and/or signals may be transmitted to a wireless device, another network node and/or any other network equipment.

Power circuitry 187 may comprise, or be coupled to, power management circuitry and is configured to supply the components of network node 160 with power for performing the functionality described herein. Power circuitry 187 may receive power from power source 186. Power source 186 and/or power circuitry 187 may be configured to provide power to the various components of network node 160 in a form suitable for the respective components (e.g., at a voltage and current level needed for each respective component). Power source 186 may either be included in, or external to, power circuitry 187 and/or network node 160.

For example, network node 160 may be connectable to an external power source (e.g., an electricity outlet) via an input circuitry or interface such as an electrical cable, whereby the external power source supplies power to power circuitry 187. As a further example, power source 186 may comprise a source of power in the form of a battery or battery pack which is connected to, or integrated in, power circuitry 187. The battery may provide backup power should the external power source fail. Other types of power sources, such as photovoltaic devices, may also be used.

Alternative embodiments of network node 160 may include additional components beyond those shown in FIGURE 7 that may be responsible for providing certain aspects of the network node's functionality, including any of the functionality described herein and/or any functionality necessary to support the subject matter described herein. For example, network node 160 may include user interface equipment to allow input of information into network node 160 and to allow output of information from network node 160. This may allow a user to perform diagnostic, maintenance, repair, and other administrative functions for network node 160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air.

In some embodiments, a WD may be configured to transmit and/or receive information without direct human interaction. For instance, a WD may be designed to transmit information to a network on a predetermined schedule, when triggered by an internal or external event, or in response to requests from the network.

Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE), a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device.

As yet another specific example, in an Internet of Things (IoT) scenario, a WD may represent a machine or other device that performs monitoring and/or measurements and transmits the results of such monitoring and/or measurements to another WD and/or a network node. The WD may in this case be a machine-to-machine (M2M) device, which may in a 3GPP context be referred to as an MTC device. As one example, the WD may be a UE implementing the 3GPP narrow band internet of things (NB-IoT) standard. Examples of such machines or devices are sensors, metering devices such as power meters, industrial machinery, or home or personal appliances (e.g. refrigerators, televisions, etc.) personal wearables (e.g., watches, fitness trackers, etc.).

In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 110 includes antenna 111, interface 114, processing circuitry 120, device readable medium 130, user interface equipment 132, auxiliary equipment 134, power source 136 and power circuitry 137. WD 110 may include multiple sets of one or more of the illustrated components for different wireless technologies supported by WD 110, such as, for example, GSM, WCDMA, LTE, NR, WiFi, WiMAX, or Bluetooth wireless technologies, just to mention a few. These wireless technologies may be integrated into the same or different chips or set of chips as other components within WD 110.

Antenna 111 may include one or more antennas or antenna arrays, configured to send and/or receive wireless signals, and is connected to interface 114. In certain alternative embodiments, antenna 111 may be separate from WD 110 and be connectable to WD 110 through an interface or port. Antenna 111, interface 114, and/or processing circuitry 120 may be configured to perform any receiving or transmitting operations described herein as being performed by a WD. Any information, data and/or signals may be received from a network node and/or another WD. In some embodiments, radio front end circuitry and/or antenna 111 may be considered an interface.

As illustrated, interface 114 comprises radio front end circuitry 112 and antenna 111. Radio front end circuitry 112 comprise one or more filters 118 and amplifiers 116. Radio front end circuitry 112 is connected to antenna 111 and processing circuitry 120 and is configured to condition signals communicated between antenna 111 and processing circuitry 120. Radio front end circuitry 112 may be coupled to or a part of antenna 111. In some embodiments, WD 110 may not include separate radio front end circuitry 112; rather, processing circuitry 120 may comprise radio front end circuitry and may be connected to antenna 111. Similarly, in some embodiments, some or all of RF transceiver circuitry 122 may be considered a part of interface 114.

Radio front end circuitry 112 may receive digital data that is to be sent out to other network nodes or WDs via a wireless connection. Radio front end circuitry 112 may convert the digital data into a radio signal having the appropriate channel and bandwidth parameters using a combination of filters 118 and/or amplifiers 116. The radio signal may then be transmitted via antenna 111. Similarly, when receiving data, antenna 111 may collect radio signals which are then converted into digital data by radio front end circuitry 112. The digital data may be passed to processing circuitry 120. In other embodiments, the interface may comprise different components and/or different combinations of components.

Processing circuitry 120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 110 components, such as device readable medium 130, WD 110 functionality. Such functionality may include providing any of the various wireless features or benefits discussed herein. For example, processing circuitry 120 may execute instructions stored in device readable medium 130 or in memory within processing circuitry 120 to provide the functionality disclosed herein.

As illustrated, processing circuitry 120 includes one or more of RF transceiver circuitry 122, baseband processing circuitry 124, and application processing circuitry 126. In other embodiments, the processing circuitry may comprise different components and/or different combinations of components. In certain embodiments processing circuitry 120 of WD 110 may comprise a SOC. In some embodiments, RF transceiver circuitry 122, baseband processing circuitry 124, and application processing circuitry 126 may be on separate chips or sets of chips.

In alternative embodiments, part or all of baseband processing circuitry 124 and application processing circuitry 126 may be combined into one chip or set of chips, and RF transceiver circuitry 122 may be on a separate chip or set of chips. In still alternative embodiments, part or all of RF transceiver circuitry 122 and baseband processing circuitry 124 may be on the same chip or set of chips, and application processing circuitry 126 may be on a separate chip or set of chips. In yet other alternative embodiments, part or all of RF transceiver circuitry 122, baseband processing circuitry 124, and application processing circuitry 126 may be combined in the same chip or set of chips. In some embodiments, RF transceiver circuitry 122 may be a part of interface 114. RF transceiver circuitry 122 may condition RF signals for processing circuitry 120.

In certain embodiments, some or all of the functionality described herein as being performed by a WD may be provided by processing circuitry 120 executing instructions stored on device readable medium 130, which in certain embodiments may be a computer-readable storage medium. In alternative embodiments, some or all of the functionality may be provided by processing circuitry 120 without executing instructions stored on a separate or discrete device readable storage medium, such as in a hard-wired manner.

In any of those embodiments, whether executing instructions stored on a device readable storage medium or not, processing circuitry 120 can be configured to perform the described functionality. The benefits provided by such functionality are not limited to processing circuitry 120 alone or to other components of WD 110, but are enjoyed by WD 110, and/or by end users and the wireless network generally.

Processing circuitry 120 may be configured to perform any determining, calculating, or similar operations (e.g., certain obtaining operations) described herein as being performed by a WD. These operations, as performed by processing circuitry 120, may include processing information obtained by processing circuitry 120 by, for example, converting the obtained information into other information, comparing the obtained information or converted information to information stored by WD 110, and/or performing one or more operations based on the obtained information or converted information, and as a result of said processing making a determination.

Device readable medium 130 may be operable to store a computer program, software, an application including one or more of logic, rules, code, tables, etc. and/or other instructions capable of being executed by processing circuitry 120. Device readable medium 130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 120. In some embodiments, processing circuitry 120 and device readable medium 130 may be integrated.

User interface equipment 132 may provide components that allow for a human user to interact with WD 110. Such interaction may be of many forms, such as visual, audial, tactile, etc. User interface equipment 132 may be operable to produce output to the user and to allow the user to provide input to WD 110. The type of interaction may vary depending on the type of user interface equipment 132 installed in WD 110. For example, if WD 110 is a smart phone, the interaction may be via a touch screen; if WD 110 is a smart meter, the interaction may be through a screen that provides usage (e.g., the number of gallons used) or a speaker that provides an audible alert (e.g., if smoke is detected).

User interface equipment 132 may include input interfaces, devices and circuits, and output interfaces, devices and circuits. User interface equipment 132 is configured to allow input of information into WD 110 and is connected to processing circuitry 120 to allow processing circuitry 120 to process the input information. User interface equipment 132 may include, for example, a microphone, a proximity or other sensor, keys/buttons, a touch display, one or more cameras, a USB port, or other input circuitry. User interface equipment 132 is also configured to allow output of information from WD 110, and to allow processing circuitry 120 to output information from WD 110. User interface equipment 132 may include, for example, a speaker, a display, vibrating circuitry, a USB port, a headphone interface, or other output circuitry. Using one or more input and output interfaces, devices, and circuits, of user interface equipment 132, WD 110 may communicate with end users and/or the wireless network and allow them to benefit from the functionality described herein.

Auxiliary equipment 134 is operable to provide more specific functionality which may not be generally performed by WDs. This may comprise specialized sensors for doing measurements for various purposes, interfaces for additional types of communication such as wired communications etc. The inclusion and type of components of auxiliary equipment 134 may vary depending on the embodiment and/or scenario.

Power source 136 may, in some embodiments, be in the form of a battery or battery pack. Other types of power sources, such as an external power source (e.g., an electricity outlet), photovoltaic devices or power cells, may also be used. WD 110 may further comprise power circuitry 137 for delivering power from power source 136 to the various parts of WD 110 which need power from power source 136 to carry out any functionality described or indicated herein. Power circuitry 137 may in certain embodiments comprise power management circuitry.

Power circuitry 137 may additionally or alternatively be operable to receive power from an external power source; in which case WD 110 may be connectable to the external power source (such as an electricity outlet) via input circuitry or an interface such as an electrical power cable. Power circuitry 137 may also in certain embodiments be operable to deliver power from an external power source to power source 136. This may be, for example, for the charging of power source 136. Power circuitry 137 may perform any formatting, converting, or other modification to the power from power source 136 to make the power suitable for the respective components of WD 110 to which power is supplied.

Although the subject matter described herein may be implemented in any appropriate type of system using any suitable components, the embodiments disclosed herein are described in relation to a wireless network, such as the example wireless network illustrated in FIGURE 7. For simplicity, the wireless network of FIGURE 7 only depicts network 106, network nodes 160 and 160b, and WDs 110, 110b, and 110c. In practice, a wireless network may further include any additional elements suitable to support communication between wireless devices or between a wireless device and another communication device, such as a landline telephone, a service provider, or any other network node or end device. Of the illustrated components, network node 160 and wireless device (WD) 110 are depicted with additional detail. The wireless network may provide communication and other types of services to one or more wireless devices to facilitate the wireless devices' access to and/or use of the services provided by, or via, the wireless network.

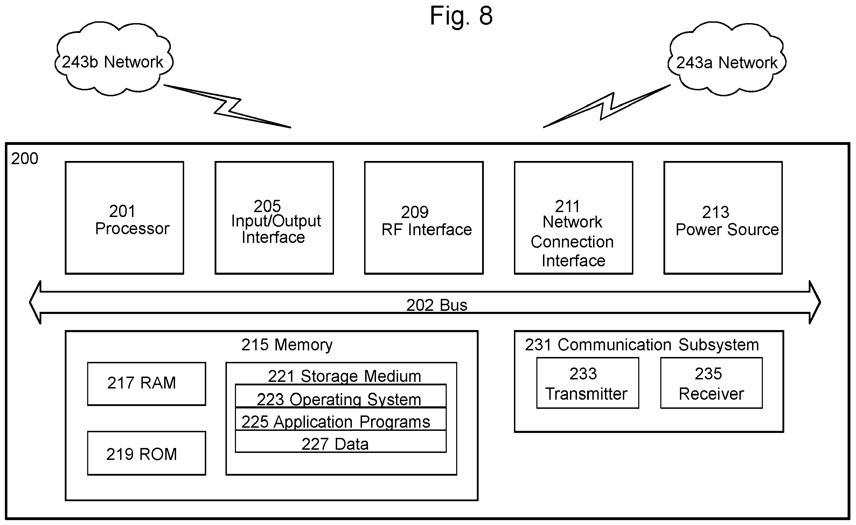

FIGURE 8 illustrates an example user equipment, according to certain embodiments. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 200 may be any UE identified by the 3rd Generation Partnership Project (3GPP), including a NB-IoT UE, a machine type communication (MTC) UE, and/or an enhanced MTC (eMTC) UE. UE 200, as illustrated in FIGURE 8, is one example of a WD configured for communication in accordance with one or more communication standards promulgated by the 3rd Generation Partnership Project (3GPP), such as 3GPP's GSM, UMTS, LTE, and/or NR standards. As mentioned previously, the term WD and UE may be used interchangeable. Accordingly, although FIGURE 8 is a UE, the components discussed herein are equally applicable to a WD, and vice-versa.

In FIGURE 8, UE 200 includes processing circuitry 201 that is operatively coupled to input/output interface 205, radio frequency (RF) interface 209, network connection interface 211, memory 215 including random access memory (RAM) 217, read-only memory (ROM) 219, and storage medium 221 or the like, communication subsystem 231, power source 213, and/or any other component, or any combination thereof. Storage medium 221 includes operating system 223, application program 225, and data 227. In other embodiments, storage medium 221 may include other similar types of information. Certain UEs may use all the components shown in FIGURE 8, or only a subset of the components. The level of integration between the components may vary from one UE to another UE. Further, certain UEs may contain multiple instances of a component, such as multiple processors, memories, transceivers, transmitters, receivers, etc.

In FIGURE 8, processing circuitry 201 may be configured to process computer instructions and data. Processing circuitry 201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 201 may include two central processing units (CPUs). Data may be information in a form suitable for use by a computer.

In the depicted embodiment, input/output interface 205 may be configured to provide a communication interface to an input device, output device, or input and output device. UE 200 may be configured to use an output device via input/output interface 205.

An output device may use the same type of interface port as an input device. For example, a USB port may be used to provide input to and output from UE 200. The output device may be a speaker, a sound card, a video card, a display, a monitor, a printer, an actuator, an emitter, a smartcard, another output device, or any combination thereof.

UE 200 may be configured to use an input device via input/output interface 205 to allow a user to capture information into UE 200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In FIGURE 8, RF interface 209 may be configured to provide a communication interface to RF components such as a transmitter, a receiver, and an antenna. Network connection interface 211 may be configured to provide a communication interface to network 243a. Network 243a may encompass wired and/or wireless networks such as a local-area network (LAN), a wide-area network (WAN), a computer network, a wireless network, a telecommunications network, another like network or any combination thereof. For example, network 243a may comprise a Wi-Fi network. Network connection interface 211 may be configured to include a receiver and a transmitter interface used to communicate with one or more other devices over a communication network according to one or more communication protocols, such as Ethernet, TCP/IP, SONET, ATM, or the like. Network connection interface 211 may implement receiver and transmitter functionality appropriate to the communication network links (e.g., optical, electrical, and the like). The transmitter and receiver functions may share circuit components, software or firmware, or alternatively may be implemented separately.

RAM 217 may be configured to interface via bus 202 to processing circuitry 201 to provide storage or caching of data or computer instructions during the execution of software programs such as the operating system, application programs, and device drivers. ROM 219 may be configured to provide computer instructions or data to processing circuitry 201. For example, ROM 219 may be configured to store invariant low-level system code or data for basic system functions such as basic input and output (I/O), startup, or reception of keystrokes from a keyboard that are stored in a non-volatile memory.

Storage medium 221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 221 may be configured to include operating system 223, application program 225 such as a web browser application, a widget or gadget engine or another application, and data file 227. Storage medium 221 may store, for use by UE 200, any of a variety of various operating systems or combinations of operating systems.

Storage medium 221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 221 may allow UE 200 to access computer-executable instructions, application programs or the like, stored on transitory or non-transitory memory media, to off-load data, or to upload data. An article of manufacture, such as one utilizing a communication system may be tangibly embodied in storage medium 221, which may comprise a device readable medium.

In FIGURE 8, processing circuitry 201 may be configured to communicate with network 243b using communication subsystem 231. Network 243a and network 243b may be the same network or networks or different network or networks. Communication subsystem 231 may be configured to include one or more transceivers used to communicate with network 243b. For example, communication subsystem 231 may be configured to include one or more transceivers used to communicate with one or more remote transceivers of another device capable of wireless communication such as another WD, UE, or base station of a radio access network (RAN) according to one or more communication protocols, such as IEEE 802.2, CDMA, WCDMA, GSM, LTE, UTRAN, WiMax, or the like. Each transceiver may include transmitter 233 and/or receiver 235 to implement transmitter or receiver functionality, respectively, appropriate to the RAN links (e.g., frequency allocations and the like). Further, transmitter 233 and receiver 235 of each transceiver may share circuit components, software or firmware, or alternatively may be implemented separately.

In the illustrated embodiment, the communication functions of communication subsystem 231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 231 may include cellular communication, Wi-Fi communication, Bluetooth communication, and GPS communication. Network 243b may encompass wired and/or wireless networks such as a local-area network (LAN), a wide-area network (WAN), a computer network, a wireless network, a telecommunications network, another like network or any combination thereof. For example, network 243b may be a cellular network, a Wi-Fi network, and/or a near-field network. Power source 213 may be configured to provide alternating current (AC) or direct current (DC) power to components of UE 200.

The features, benefits and/or functions described herein may be implemented in one of the components of UE 200 or partitioned across multiple components of UE 200. Further, the features, benefits, and/or functions described herein may be implemented in any combination of hardware, software or firmware. In one example, communication subsystem 231 may be configured to include any of the components described herein. Further, processing circuitry 201 may be configured to communicate with any of such components over bus 202. In another example, any of such components may be represented by program instructions stored in memory that when executed by processing circuitry 201 perform the corresponding functions described herein. In another example, the functionality of any of such components may be partitioned between processing circuitry 201 and communication subsystem 231. In another example, the non-computationally intensive functions of any of such components may be implemented in software or firmware and the computationally intensive functions may be implemented in hardware.

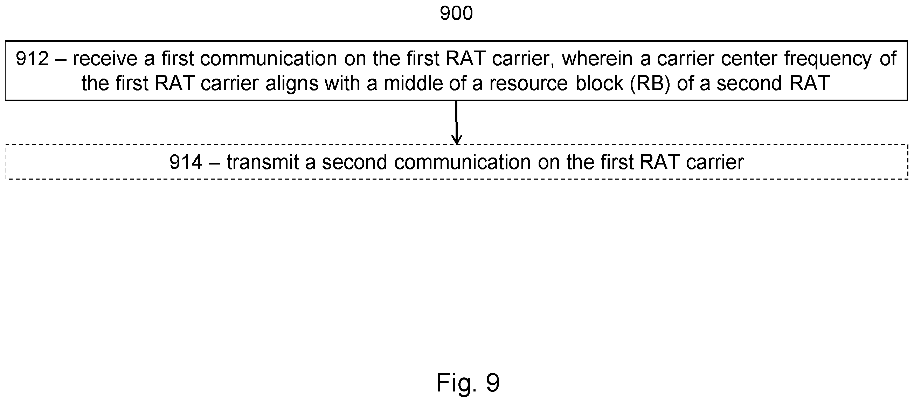

FIGURE 9 is a flowchart illustrating an example method in a wireless device, according to certain embodiments. In particular embodiments, one or more steps of FIGURE 9 may be performed by wireless device 110 described with respect to FIGURE 7. The wireless device may communicate using TDD on a first RAT carrier located within a frequency band of a second RAT.

The method may begin at step 912, where the wireless device (e.g., wireless device 110) receives a first communication on the first RAT carrier. A carrier center frequency of the first RAT carrier aligns with a middle of a RB) of the second RAT. In particular embodiments, the location of the center carrier frequency of the first RAT satisfies raster requirements of the first RAT.

In the invention as claimed, the first RAT uses a 100 kHz based channel raster and the second RAT uses a SCS-based channel raster. The second RAT may use 15 kHz SCS. The first RAT may be NB-IoT and the second RAT may be 5G NR.

In particular embodiments, the first and second RAT may align according to any of the examples and embodiments described above (e.g., with respect to FIGURES 3-6 and Tables 1-8).

At step 914, the wireless device the method further comprises transmitting a second communication on the first RAT carrier.

Modifications, additions, or omissions may be made to method 900 of FIGURE 9. Additionally, one or more steps in the method of FIGURE 9 may be performed in parallel or in any suitable order.

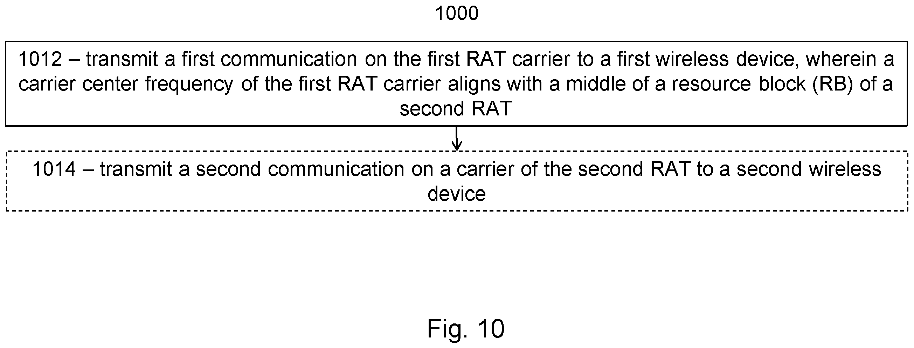

FIGURE 10 is a flowchart illustrating an example method in a network node, according to certain embodiments. In particular embodiments, one or more steps of FIGURE 10 may be performed by network node 160 described with respect to FIGURE 7. The network node is configured to communicate using TDD on a first RAT carrier located within a frequency band of a second RAT.

The method begins at step 1012, where the network node (e.g., network node 160) transmitting a first communication on the first RAT carrier to a first wireless device. A carrier center frequency of the first RAT carrier aligns with a middle of a RB of the second RAT. In particular embodiments, the location of the center carrier frequency of the first RAT satisfies raster requirements of the first RAT.

In the invention as claimed, the first RAT uses a 100 kHz based channel raster and the second RAT uses a SCS-based channel raster. The second RAT may use 15 kHz SCS. The first RAT may be NB-IoT and the second RAT may be 5G NR.

In particular embodiments, the first and second RAT may align according to any of the examples and embodiments described above (e.g., with respect to FIGURES 3-6 and Tables 1-8).

At step 1014, the network node transmits a second communication on a carrier of the second RAT to a second wireless device. For example, the network node may be communicating with a first wireless device using NB-IoT and a second wireless device using NR.

Modifications, additions, or omissions may be made to method 1000 of FIGURE 10. Additionally, one or more steps in the method of FIGURE 10 may be performed in parallel or in any suitable order.

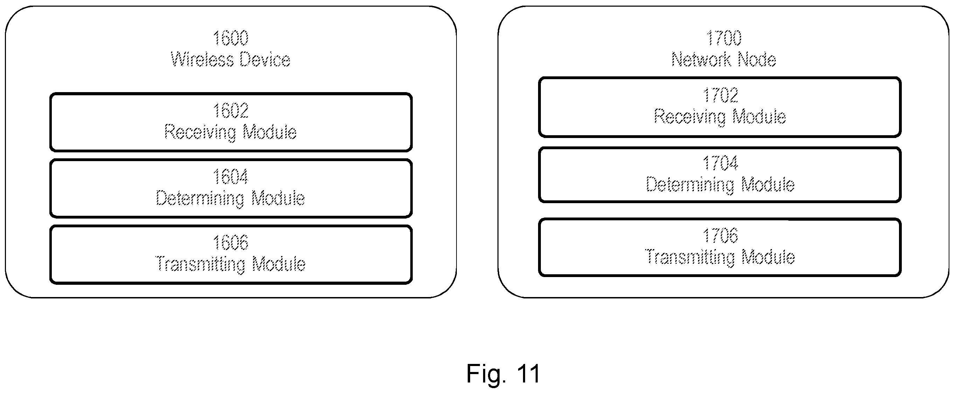

FIGURE 11 illustrates a schematic block diagram of two apparatuses in a wireless network (for example, the wireless network illustrated in FIGURE 7). The apparatuses include a wireless device and a network node (e.g., wireless device 110 and network node 160 illustrated in FIGURE 7). Apparatuses 1600 and 1700 are operable to carry out the example methods described with reference to FIGURES 9 and 10, respectively, and possibly any other processes or methods disclosed herein. It is also to be understood that the methods of FIGURES 9 and 10 are not necessarily carried out solely by apparatus 1600 and/or apparatus 1700. At least some operations of the method can be performed by one or more other entities.

Virtual apparatuses 1600 and 1700 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments.

In some implementations, the processing circuitry may be used to cause receiving module 1602, determining module 1604, transmitting module 1606, and any other suitable units of apparatus 1600 to perform corresponding functions according one or more embodiments of the present disclosure. Similarly, the processing circuitry described above may be used to cause receiving module 1702, determining module 1704, transmitting module 1706, and any other suitable units of apparatus 1700 to perform corresponding functions according one or more embodiments of the present disclosure.

As illustrated in FIGURE 11, apparatus 1600 includes receiving module 1602 configured to receive transmissions on a particular RAT, according to any of the embodiments and examples described herein. Transmitting module 1606 is configured to transmit transmissions on a particular RAT, according to any of the embodiments and examples described herein. The RAT may overlap with another RAT according to any of the embodiments and examples described herein.

As illustrated in FIGURE 11, apparatus 1700 includes receiving module 1702 configured to receive transmissions on a particular RAT or RATs, according to any of the embodiments and examples described herein. Transmitting module 1706 is configured to transmit transmissions on a particular RAT or RATs, according to any of the embodiments and examples described herein. The RATs may overlap according to any of the embodiments and examples described herein.

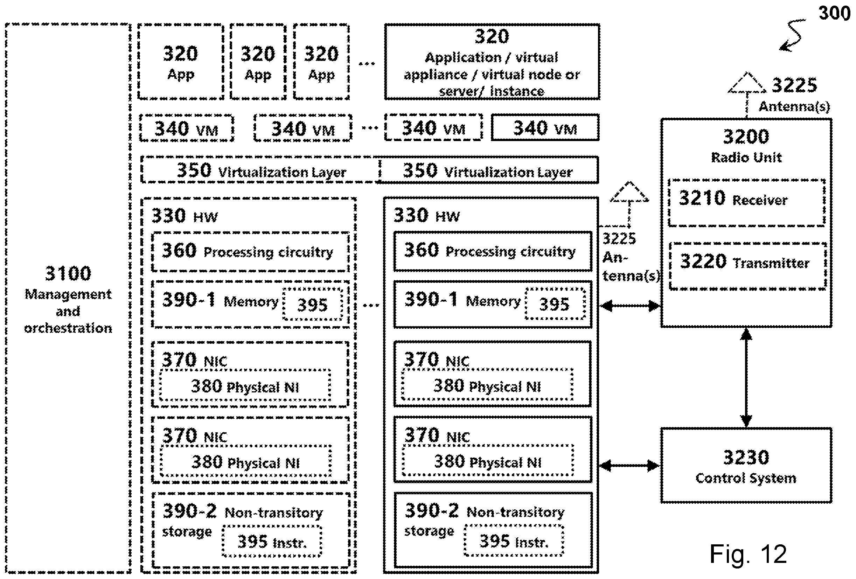

FIGURE 12 is a schematic block diagram illustrating a virtualization environment 300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 300 hosted by one or more of hardware nodes 330. Further, in embodiments in which the virtual node is not a radio access node or does not require radio connectivity (e.g., a core network node), then the network node may be entirely virtualized.

The functions may be implemented by one or more applications 320 (which may alternatively be called software instances, virtual appliances, network functions, virtual nodes, virtual network functions, etc.) operative to implement some of the features, functions, and/or benefits of some of the embodiments disclosed herein. Applications 320 are run in virtualization environment 300 which provides hardware 330 comprising processing circuitry 360 and memory 390. Memory 390 contains instructions 395 executable by processing circuitry 360 whereby application 320 is operative to provide one or more of the features, benefits, and/or functions disclosed herein.

Virtualization environment 300, comprises general-purpose or special-purpose network hardware devices 330 comprising a set of one or more processors or processing circuitry 360, which may be commercial off-the-shelf (COTS) processors, dedicated Application Specific Integrated Circuits (ASICs), or any other type of processing circuitry including digital or analog hardware components or special purpose processors. Each hardware device may comprise memory 390-1 which may be non-persistent memory for temporarily storing instructions 395 or software executed by processing circuitry 360. Each hardware device may comprise one or more network interface controllers (NICs) 370, also known as network interface cards, which include physical network interface 380. Each hardware device may also include non-transitory, persistent, machine-readable storage media 390-2 having stored therein software 395 and/or instructions executable by processing circuitry 360. Software 395 may include any type of software including software for instantiating one or more virtualization layers 350 (also referred to as hypervisors), software to execute virtual machines 340 as well as software allowing it to execute functions, features and/or benefits described in relation with some embodiments described herein.

Virtual machines 340, comprise virtual processing, virtual memory, virtual networking or interface and virtual storage, and may be run by a corresponding virtualization layer 350 or hypervisor. Different embodiments of the instance of virtual appliance 320 may be implemented on one or more of virtual machines 340, and the implementations may be made in different ways.

During operation, processing circuitry 360 executes software 395 to instantiate the hypervisor or virtualization layer 350, which may sometimes be referred to as a virtual machine monitor (VMM). Virtualization layer 350 may present a virtual operating platform that appears like networking hardware to virtual machine 340.

As shown in FIGURE 12, hardware 330 may be a standalone network node with generic or specific components. Hardware 330 may comprise antenna 3225 and may implement some functions via virtualization. Alternatively, hardware 330 may be part of a larger cluster of hardware (e.g. such as in a data center or customer premise equipment (CPE)) where many hardware nodes work together and are managed via management and orchestration (MANO) 3100, which, among others, oversees lifecycle management of applications 320.

Virtualization of the hardware is in some contexts referred to as network function virtualization (NFV). NFV may be used to consolidate many network equipment types onto industry standard high-volume server hardware, physical switches, and physical storage, which can be located in data centers, and customer premise equipment.

In the context of NFV, virtual machine 340 may be a software implementation of a physical machine that runs programs as if they were executing on a physical, non-virtualized machine. Each of virtual machines 340, and that part of hardware 330 that executes that virtual machine, be it hardware dedicated to that virtual machine and/or hardware shared by that virtual machine with others of the virtual machines 340, forms a separate virtual network elements (VNE).

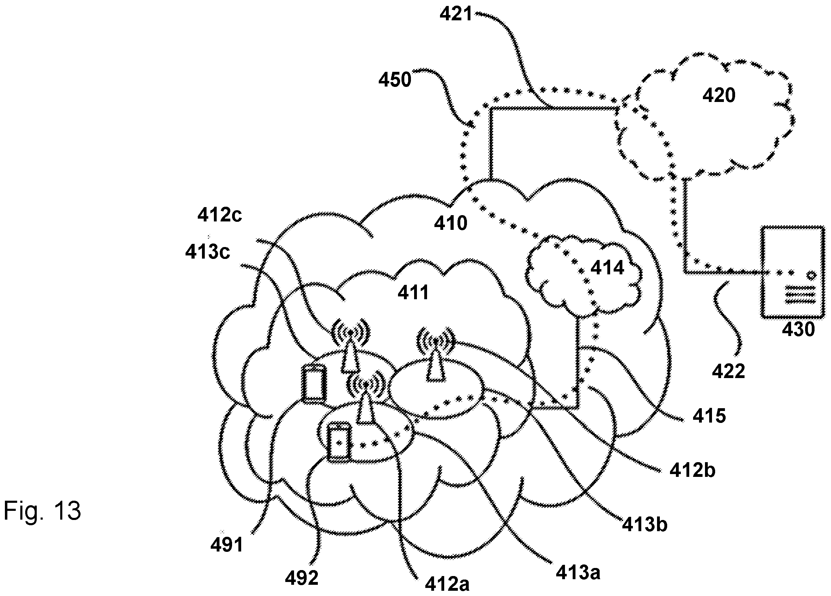

Still in the context of NFV, Virtual Network Function (VNF) is responsible for handling specific network functions that run in one or more virtual machines 340 on top of hardware networking infrastructure 330 and corresponds to application 320 in FIGURE 13.

In some embodiments, one or more radio units 3200 that each include one or more transmitters 3220 and one or more receivers 3210 may be coupled to one or more antennas 3225. Radio units 3200 may communicate directly with hardware nodes 330 via one or more appropriate network interfaces and may be used in combination with the virtual components to provide a virtual node with radio capabilities, such as a radio access node or a base station.

In some embodiments, some signaling can be effected with the use of control system 3230 which may alternatively be used for communication between the hardware nodes 330 and radio units 3200.

With reference to FIGURE 13, in accordance with an embodiment, a communication system includes telecommunication network 410, such as a 3GPP-type cellular network, which comprises access network 411, such as a radio access network, and core network 414. Access network 411 comprises a plurality of base stations 412a, 412b, 412c, such as NBs, eNBs, gNBs or other types of wireless access points, each defining a corresponding coverage area 413a, 413b, 413c. Each base station 412a, 412b, 412c is connectable to core network 414 over a wired or wireless connection 415. A first UE 491 located in coverage area 413c is configured to wirelessly connect to, or be paged by, the corresponding base station 412c. A second UE 492 in coverage area 413a is wirelessly connectable to the corresponding base station 412a. While a plurality of UEs 491, 492 are illustrated in this example, the disclosed embodiments are equally applicable to a situation where a sole UE is in the coverage area or where a sole UE is connecting to the corresponding base station 412.

Telecommunication network 410 is itself connected to host computer 430, which may be embodied in the hardware and/or software of a standalone server, a cloud-implemented server, a distributed server or as processing resources in a server farm. Host computer 430 may be under the ownership or control of a service provider or may be operated by the service provider or on behalf of the service provider. Connections 421 and 422 between telecommunication network 410 and host computer 430 may extend directly from core network 414 to host computer 430 or may go via an optional intermediate network 420. Intermediate network 420 may be one of, or a combination of more than one of, a public, private or hosted network; intermediate network 420, if any, may be a backbone network or the Internet; in particular, intermediate network 420 may comprise two or more sub-networks (not shown).

The communication system of FIGURE 13 as a whole enables connectivity between the connected UEs 491, 492 and host computer 430. The connectivity may be described as an over-the-top (OTT) connection 450. Host computer 430 and the connected UEs 491, 492 are configured to communicate data and/or signaling via OTT connection 450, using access network 411, core network 414, any intermediate network 420 and possible further infrastructure (not shown) as intermediaries. OTT connection 450 may be transparent in the sense that the participating communication devices through which OTT connection 450 passes are unaware of routing of uplink and downlink communications. For example, base station 412 may not or need not be informed about the past routing of an incoming downlink communication with data originating from host computer 430 to be forwarded (e.g., handed over) to a connected UE 491. Similarly, base station 412 need not be aware of the future routing of an outgoing uplink communication originating from the UE 491 towards the host computer 430.

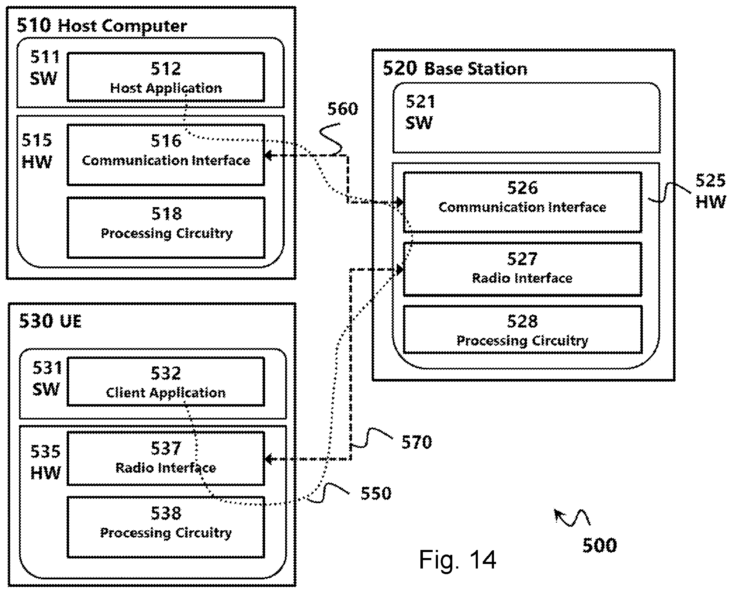

FIGURE 14 illustrates an example host computer communicating via a base station with a user equipment over a partially wireless connection, according to certain embodiments. Example implementations, in accordance with an embodiment of the UE, base station and host computer discussed in the preceding paragraphs will now be described with reference to FIGURE 14. In communication system 500, host computer 510 comprises hardware 515 including communication interface 516 configured to set up and maintain a wired or wireless connection with an interface of a different communication device of communication system 500. Host computer 510 further comprises processing circuitry 518, which may have storage and/or processing capabilities. In particular, processing circuitry 518 may comprise one or more programmable processors, application-specific integrated circuits, field programmable gate arrays or combinations of these (not shown) adapted to execute instructions. Host computer 510 further comprises software 511, which is stored in or accessible by host computer 510 and executable by processing circuitry 518. Software 511 includes host application 512. Host application 512 may be operable to provide a service to a remote user, such as UE 530 connecting via OTT connection 550 terminating at UE 530 and host computer 510. In providing the service to the remote user, host application 512 may provide user data which is transmitted using OTT connection 550.

Communication system 500 further includes base station 520 provided in a telecommunication system and comprising hardware 525 enabling it to communicate with host computer 510 and with UE 530. Hardware 525 may include communication interface 526 for setting up and maintaining a wired or wireless connection with an interface of a different communication device of communication system 500, as well as radio interface 527 for setting up and maintaining at least wireless connection 570 with UE 530 located in a coverage area (not shown in FIGURE 14) served by base station 520. Communication interface 526 may be configured to facilitate connection 560 to host computer 510. Connection 560 may be direct, or it may pass through a core network (not shown in FIGURE 14) of the telecommunication system and/or through one or more intermediate networks outside the telecommunication system. In the embodiment shown, hardware 525 of base station 520 further includes processing circuitry 528, which may comprise one or more programmable processors, application-specific integrated circuits, field programmable gate arrays or combinations of these (not shown) adapted to execute instructions. Base station 520 further has software 521 stored internally or accessible via an external connection.

Communication system 500 further includes UE 530 already referred to. Its hardware 535 may include radio interface 537 configured to set up and maintain wireless connection 570 with a base station serving a coverage area in which UE 530 is currently located. Hardware 535 of UE 530 further includes processing circuitry 538, which may comprise one or more programmable processors, application-specific integrated circuits, field programmable gate arrays or combinations of these (not shown) adapted to execute instructions. UE 530 further comprises software 531, which is stored in or accessible by UE 530 and executable by processing circuitry 538. Software 531 includes client application 532. Client application 532 may be operable to provide a service to a human or non-human user via UE 530, with the support of host computer 510. In host computer 510, an executing host application 512 may communicate with the executing client application 532 via OTT connection 550 terminating at UE 530 and host computer 510. In providing the service to the user, client application 532 may receive request data from host application 512 and provide user data in response to the request data. OTT connection 550 may transfer both the request data and the user data. Client application 532 may interact with the user to generate the user data that it provides.

It is noted that host computer 510, base station 520 and UE 530 illustrated in FIGURE 14 may be similar or identical to host computer 430, one of base stations 412a, 412b, 412c and one of UEs 491, 492 of FIGURE 13, respectively. This is to say, the inner workings of these entities may be as shown in FIGURE 14 and independently, the surrounding network topology may be that of FIGURE 13.

In FIGURE 14, OTT connection 550 has been drawn abstractly to illustrate the communication between host computer 510 and UE 530 via base station 520, without explicit reference to any intermediary devices and the precise routing of messages via these devices. Network infrastructure may determine the routing, which it may be configured to hide from UE 530 or from the service provider operating host computer 510, or both. While OTT connection 550 is active, the network infrastructure may further take decisions by which it dynamically changes the routing (e.g., based on load balancing consideration or reconfiguration of the network).

Wireless connection 570 between UE 530 and base station 520 is in accordance with the teachings of the embodiments described throughout this disclosure. One or more of the various embodiments improve the performance of OTT services provided to UE 530 using OTT connection 550, in which wireless connection 570 forms the last segment. More precisely, the teachings of these embodiments may improve the signaling overhead and reduce latency, and thereby provide benefits such as reduced user waiting time, better responsiveness and extended battery life.

A measurement procedure may be provided for monitoring data rate, latency and other factors on which the one or more embodiments improve. There may further be an optional network functionality for reconfiguring OTT connection 550 between host computer 510 and UE 530, in response to variations in the measurement results. The measurement procedure and/or the network functionality for reconfiguring OTT connection 550 may be implemented in software 511 and hardware 515 of host computer 510 or in software 531 and hardware 535 of UE 530, or both. In embodiments, sensors (not shown) may be deployed in or in association with communication devices through which OTT connection 550 passes; the sensors may participate in the measurement procedure by supplying values of the monitored quantities exemplified above or supplying values of other physical quantities from which software 511, 531 may compute or estimate the monitored quantities. The reconfiguring of OTT connection 550 may include message format, retransmission settings, preferred routing etc.; the reconfiguring need not affect base station 520, and it may be unknown or imperceptible to base station 520. Such procedures and functionalities may be known and practiced in the art. In certain embodiments, measurements may involve proprietary UE signaling facilitating host computer 510's measurements of throughput, propagation times, latency and the like. The measurements may be implemented in that software 511 and 531 causes messages to be transmitted, in particular empty or 'dummy' messages, using OTT connection 550 while it monitors propagation times, errors etc.

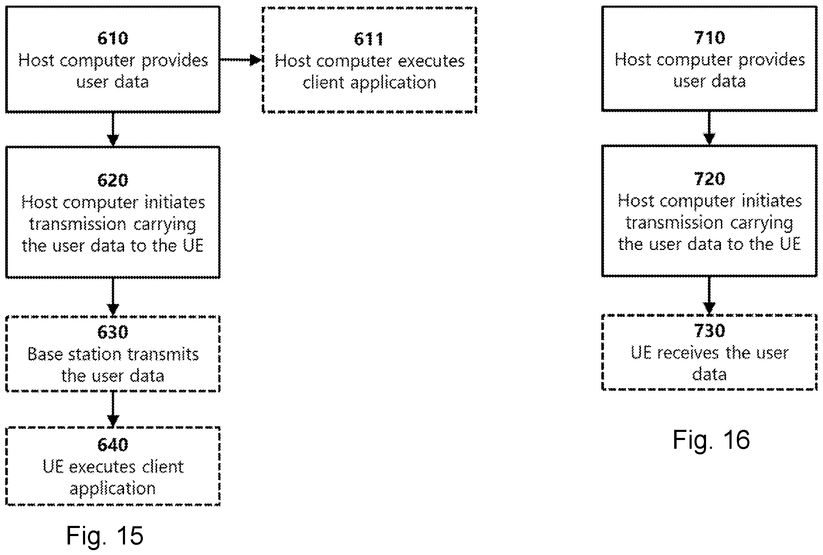

FIGURE 15 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 15 will be included in this section.

In step 610, the host computer provides user data. In substep 611 (which may be optional) of step 610, the host computer provides the user data by executing a host application. In step 620, the host computer initiates a transmission carrying the user data to the UE. In step 630 (which may be optional), the base station transmits to the UE the user data which was carried in the transmission that the host computer initiated, in accordance with the teachings of the embodiments described throughout this disclosure. In step 640 (which may also be optional), the UE executes a client application associated with the host application executed by the host computer.

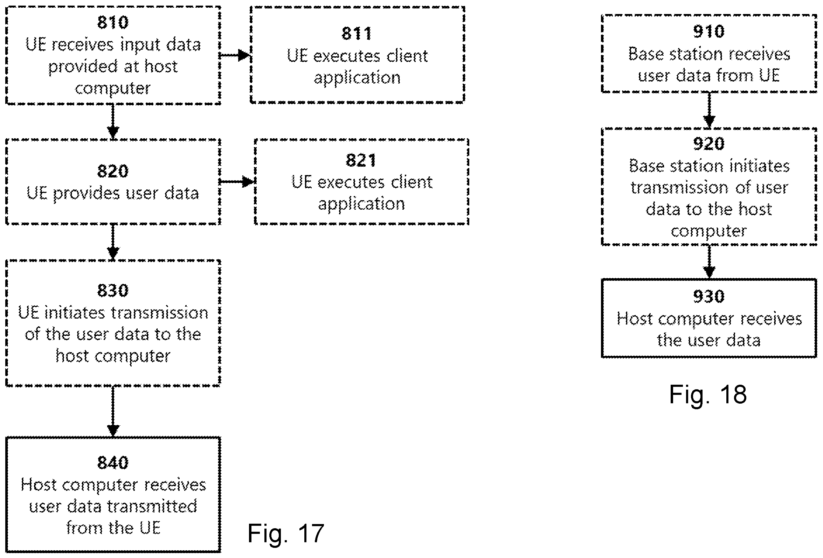

FIGURE 16 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 16 will be included in this section.

In step 710 of the method, the host computer provides user data. In an optional substep (not shown) the host computer provides the user data by executing a host application. In step 720, the host computer initiates a transmission carrying the user data to the UE. The transmission may pass via the base station, in accordance with the teachings of the embodiments described throughout this disclosure. In step 730 (which may be optional), the UE receives the user data carried in the transmission.

FIGURE 17 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 17 will be included in this section.

In step 810 (which may be optional), the UE receives input data provided by the host computer. Additionally, or alternatively, in step 820, the UE provides user data. In substep 821 (which may be optional) of step 820, the UE provides the user data by executing a client application. In substep 811 (which may be optional) of step 810, the UE executes a client application which provides the user data in reaction to the received input data provided by the host computer. In providing the user data, the executed client application may further consider user input received from the user. Regardless of the specific manner in which the user data was provided, the UE initiates, in substep 830 (which may be optional), transmission of the user data to the host computer. In step 840 of the method, the host computer receives the user data transmitted from the UE, in accordance with the teachings of the embodiments described throughout this disclosure.

FIGURE 18 is a flowchart illustrating a method implemented in a communication system, in accordance with one embodiment. The communication system includes a host computer, a base station and a UE which may be those described with reference to FIGURES 13 and 14. For simplicity of the present disclosure, only drawing references to FIGURE 18 will be included in this section.

In step 910 (which may be optional), in accordance with the teachings of the embodiments described throughout this disclosure, the base station receives user data from the UE. In step 920 (which may be optional), the base station initiates transmission of the received user data to the host computer. In step 930 (which may be optional), the host computer receives the user data carried in the transmission initiated by the base station.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Modifications, additions, or omissions may be made to the systems and apparatuses disclosed herein without departing from the scope of the invention. The components of the systems and apparatuses may be integrated or separated. Moreover, the operations of the systems and apparatuses may be performed by more, fewer, or other components. Additionally, operations of the systems and apparatuses may be performed using any suitable logic comprising software, hardware, and/or other logic. As used in this document, "each" refers to each member of a set or each member of a subset of a set.

Modifications, additions, or omissions may be made to the methods disclosed herein without departing from the scope of the invention. The methods may include more, fewer, or other steps. Additionally, steps may be performed in any suitable order.

The foregoing description sets forth numerous specific details. It is understood, however, that embodiments may be practiced without these specific details. In other instances, well-known circuits, structures and techniques have not been shown in detail in order not to obscure the understanding of this description. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments, whether or not explicitly described.

Although this disclosure has been described in terms of certain embodiments, alterations and permutations of the embodiments will be apparent to those skilled in the art. Accordingly, the above description of the embodiments does not constrain this disclosure. Other changes, substitutions, and alterations are possible without departing from the scope of this disclosure, as defined by the claims below.

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| 1x RTT | CDMA2000 1x Radio Transmission Technology |
| 3GPP | 3rd Generation Partnership Project |
| 5G | 5th Generation |
| ABS | Almost Blank Subframe |
| ARQ | Automatic Repeat Request |
| AWGN | Additive White Gaussian Noise |
| BCCH | Broadcast Control Channel |
| BCH | Broadcast Channel |
| CA | Carrier Aggregation |
| CC | Carrier Component |
| CCCH SDU | Common Control Channel SDU |
| CDMA | Code Division Multiplexing Access |
| CGI | Cell Global Identifier |
| CIR | Channel Impulse Response |
| CP | Cyclic Prefix |
| CPICH | Common Pilot Channel |
| CPICH Ec/No | CPICH Received energy per chip divided by the power density in the band |
| CQI | Channel Quality information |
| C-RNTI | Cell RNTI |
| CSI | Channel State Information |
| DCCH | Dedicated Control Channel |
| DL | Downlink |
| DM | Demodulation |
| DMRS | Demodulation Reference Signal |
| DRX | Discontinuous Reception |
| DTX | Discontinuous Transmission |
| DTCH | Dedicated Traffic Channel |
| DUT | Device Under Test |
| E-CID | Enhanced Cell-ID (positioning method) |
| E-SMLC | Evolved-Serving Mobile Location Centre |
| ECGI | Evolved CGI |
| eNB | E-UTRAN NodeB |
| ePDCCH | enhanced Physical Downlink Control Channel |
| E-SMLC | evolved Serving Mobile Location Center |
| E-UTRA | Evolved UTRA |
| E-UTRAN | Evolved UTRAN |

| FDD | Frequency Division Duplex |
|---|---|
| GERAN | GSM EDGE Radio Access Network |
| gNB | Base station in NR |
| GNSS | Global Navigation Satellite System |
| GSM | Global System for Mobile communication |
| HARQ | Hybrid Automatic Repeat Request |
| HO | Handover |
| HSPA | High Speed Packet Access |
| HRPD | High Rate Packet Data |
| LOS | Line of Sight |
| LPP | LTE Positioning Protocol |
| LTE | Long-Term Evolution |
| MAC | Medium Access Control |
| MBMS | Multimedia Broadcast Multicast Services |
| MBSFN | Multimedia Broadcast multicast service Single Frequency Network |
| MBSFN ABS | MBSFN Almost Blank Subframe |
| MDT | Minimization of Drive Tests |
| MIB | Master Information Block |
| MME | Mobility Management Entity |
| MSC | Mobile Switching Center |
| NPDCCH | Narrowband Physical Downlink Control Channel |
| NR | New Radio |
| OCNG | OFDMA Channel Noise Generator |
| OFDM | Orthogonal Frequency Division Multiplexing |
| OFDMA | Orthogonal Frequency Division Multiple Access |
| OSS | Operations Support System |
| OTDOA | Observed Time Difference of Arrival |
| O&M | Operation and Maintenance |
| PBCH | Physical Broadcast Channel |
| P-CCPCH | Primary Common Control Physical Channel |
| PCell | Primary Cell |
| PCFICH | Physical Control Format Indicator Channel |
| PDCCH | Physical Downlink Control Channel |
| PDP | Profile Delay Profile |
| PDSCH | Physical Downlink Shared Channel |
| PGW | Packet Gateway |
| PHICH | Physical Hybrid-ARQ Indicator Channel |
| PLMN | Public Land Mobile Network |
| PMI | Precoder Matrix Indicator |
| PRACH | Physical Random Access Channel |
| PRS | Positioning Reference Signal |
| PSS | Primary Synchronization Signal |
| PUCCH | Physical Uplink Control Channel |
| PUSCH | Physical Uplink Shared Channel |
| RACH | Random Access Channel |
| QAM | Quadrature Amplitude Modulation |
| RAN | Radio Access Network |
| RAT | Radio Access Technology |
| RLM | Radio Link Management |
| RNC | Radio Network Controller |
| RNTI | Radio Network Temporary Identifier |
| RRC | Radio Resource Control |
| RRM | Radio Resource Management |
| RS | Reference Signal |
| RSCP | Received Signal Code Power |
| RSRP | Reference Symbol Received Power OR Reference Signal Received Power |
| RSRQ | Reference Signal Received Quality OR Reference Symbol Received Quality |
| RSSI | Received Signal Strength Indicator |

RSTD        Reference Signal Time Difference
SCH         Synchronization Channel
SCell        Secondary Cell
SDU         Service Data Unit
SFN         System Frame Number
SGW         Serving Gateway
SI            System Information
SIB          System Information Block
SNR         Signal to Noise Ratio
SON         Self Optimized Network
SS            Synchronization Signal
SSS         Secondary Synchronization Signal
TDD         Time Division Duplex
TDOA       Time Difference of Arrival
TOA         Time of Arrival
TSS         Tertiary Synchronization Signal
TTI          Transmission Time Interval
UE           User Equipment
UL            Uplink
UMTS       Universal Mobile Telecommunication System
USIM        Universal Subscriber Identity Module
UTDOA      Uplink Time Difference of Arrival
UTRA       Universal Terrestrial Radio Access
UTRAN      Universal Terrestrial Radio Access Network
WCDMA     Wide CDMA
WLAN       Wide Local Area Network

**Claims**

1. A method (1000) performed by a network node for communicating using time division duplexing, TDD, on a first radio access technology, RAT, carrier located within a frequency band of a second RAT, the method comprising: transmitting (1012) a first communication on the first RAT carrier to a first wireless device, wherein a carrier center frequency of the first RAT carrier aligns with a middle of a resource block, RB, of the second RAT, and wherein the first RAT uses a 100 kHz based channel raster and the second RAT uses a subcarrier spacing, SCS, based channel raster.

2. The method of claim 1, wherein the location of the center carrier frequency of the first RAT satisfies raster requirements of the first RAT.

3. The method of any one of claims 1-2, further comprising: transmitting (1014) a second communication on a carrier of the second RAT to a second wireless device.

4. The method of any one of claims 1-3, wherein the second RAT uses 15 kHz SCS.

5. The method of any one of claims 1-4, wherein the first RAT is Narrowband Internet-of-Things, NB-IoT, and the second RAT is fifth generation, 5G, new radio, NR.

6. The method of any one of claims 4-5, wherein:

   the second RAT channel raster frequency is expressed as 15m kHz, where $m$ is an integer;
   the resource blocks in a carrier of the second RAT are indexed from 0 to N-1, where N is the total number of resource blocks in the carrier of the second RAT;
   the resource block of the second RAT is identified by an RB index from the middle RB that contains the second RAT channel raster;
   for even values of N, the RB index is determined as follows:

when the remainder of *m* divided by 20 is one of 1, 8, 14, and 15, then the RB index is $\dfrac{N}{2} - 5p$ , where $\dfrac{2-N}{10} \leq p \leq \dfrac{N}{10}$ and *p* is an integer;

when the remainder of *m* divided by 20 is one of 2, 3, 9, and 16, then the RB index is $\dfrac{N}{2} - 5p + 1$ , where $\dfrac{4-N}{10} \leq p \leq \dfrac{N+2}{10}$ and *p* is an integer;

when the remainder of *m* divided by 20 is one of 4, 10, 11, and 17, then the RB index is $\dfrac{N}{2} - 5p + 2$ , where $\dfrac{6-N}{10} \leq p \leq \dfrac{N+4}{10}$ and *p* is an integer;

when the remainder of *m* divided by 20 is one of 5, 12, 18, and 19, then the RB index is $\dfrac{N}{2} - 5p + 3$ , where $\dfrac{8-N}{10} \leq p \leq \dfrac{N+6}{10}$ and *p* is an integer;

when the remainder of *m* divided by 20 is one of 0, 6, 7, and 13, then the RB index is $\dfrac{N}{2} - 5p + 4$ , where $\dfrac{10-N}{10} \leq p \leq \dfrac{N+8}{10}$ and *p* is an integer;

for odd values of N, the RB index is determined as follows:

when the remainder of *m* divided by 20 is one of 0, 1, 7, and 14, then the RB index is $\dfrac{N-1}{2} - 5p$ , where $\dfrac{1-N}{10} \leq p \leq \dfrac{N-1}{10}$ and *p* is an integer;

when the remainder of *m* divided by 20 is one of 2, 8, 9, and 15, then the RB index is $\dfrac{N-1}{2} - 5p + 1$ , where $\dfrac{3-N}{10} \leq p \leq \dfrac{N+1}{10}$ and *p* is an integer;

when the remainder of *m* divided by 20 is one of 3, 10, 16, and 17, then the RB index is $\dfrac{N-1}{2} - 5p + 2$ , where $\dfrac{5-N}{10} \leq p \leq \dfrac{N+3}{10}$ and *p* is an integer;

when the remainder of *m* divided by 20 is one of 4, 5, 11, and 18, then the RB index is $\dfrac{N-1}{2} - 5p + 3$ , where $\dfrac{7-N}{10} \leq p \leq \dfrac{N+5}{10}$ and *p* is an integer; and

when the remainder of *m* divided by 20 is one of 6, 12, 13, and 19, then the RB index is $\dfrac{N-1}{2} - 5p + 4$ , where $\dfrac{9-N}{10} \leq p \leq \dfrac{N+7}{10}$ and *p* is an integer.

**7.** A network node (160) configured to communicate using time division duplexing, TDD, on a first radio access technology, RAT, carrier located within a frequency band of a second RAT, the network node comprising processing circuitry (170) configured to:
transmit a first communication on the first RAT carrier to a first wireless device, wherein a carrier center frequency of the first RAT carrier aligns with a middle of a resource block, RB, of the second RAT, and wherein the first RAT uses a 100 kHz based channel raster and the second RAT uses a subcarrier spacing, SCS, based channel raster.

**8.** The network node of claim 7, wherein the location of the center carrier frequency of the first RAT satisfies raster requirements of the first RAT.

**9.** The network node of any one of claims 7-8, the processing circuitry further operable to transmit a second communication on a carrier of the second RAT to a second wireless device.

**10.** The network node of any one of claims 7-9, wherein the second RAT uses 15 kHz SCS.

**11.** The network node of any one of claims 7-10, wherein the first RAT is Narrowband Internet-of-Things, NB-IoT, and the second RAT is fifth generation, 5G, new radio, NR.

**12.** The network node of any one of claims 10-11, wherein:

the second RAT channel raster frequency is expressed as 15m kHz, where $m$ is an integer;
the resource blocks in a carrier of the second RAT are indexed from 0 to N-1, where N is the total number of resource blocks in the carrier of the second RAT;
the resource block of the second RAT is identified by an RB index from the middle RB that contains the second RAT channel raster;
for even values of N, the RB index is determined as follows:

when the remainder of $m$ divided by 20 is one of 1, 8, 14, and 15, then the RB index is $\frac{N}{2} - 5p$, where $\frac{2-N}{10} \leq p \leq \frac{N}{10}$ and $p$ is an integer;

when the remainder of $m$ divided by 20 is one of 2, 3, 9, and 16, then the RB index is $\frac{N}{2} - 5p + 1$, where $\frac{4-N}{10} \leq p \leq \frac{N+2}{10}$ and $p$ is an integer;

when the remainder of $m$ divided by 20 is one of 4, 10, 11, and 17, then the RB index is $\frac{N}{2} - 5p + 2$, where $\frac{6-N}{10} \leq p \leq \frac{N+4}{10}$ and $p$ is an integer;

when the remainder of $m$ divided by 20 is one of 5, 12, 18, and 19, then the RB index is $\frac{N}{2} - 5p + 3$, where $\frac{8-N}{10} \leq p \leq \frac{N+6}{10}$ and $p$ is an integer;

when the remainder of $m$ divided by 20 is one of 0, 6, 7, and 13, then the RB index is $\frac{N}{2} - 5p + 4$, where $\frac{10-N}{10} \leq p \leq \frac{N+8}{10}$ and $p$ is an integer;

for odd values of N, the RB index is determined as follows:

when the remainder of $m$ divided by 20 is one of 0, 1, 7, and 14, then the RB index is $\frac{N-1}{2} - 5p$, where

$$\frac{1-N}{10} \leq p \leq \frac{N-1}{10}$$ and $p$ is an integer;

when the remainder of $m$ divided by 20 is one of 2, 8, 9, and 15, then the RB index is $\frac{N-1}{2} - 5p + 1$,

where $$\frac{3-N}{10} \leq p \leq \frac{N+1}{10}$$ and $p$ is an integer;

when the remainder of $m$ divided by 20 is one of 3, 10, 16, and 17, then the RB index is $\frac{N-1}{2} - 5p + 2$, where $$\frac{5-N}{10} \leq p \leq \frac{N+3}{10}$$ and $p$ is an integer;

when the remainder of $m$ divided by 20 is one of 4, 5, 11, and 18, then the RB index is $\frac{N-1}{2} - 5p + 3$, where $$\frac{7-N}{10} \leq p \leq \frac{N+5}{10}$$ and $p$ is an integer; and

when the remainder of $m$ divided by 20 is one of 6, 12, 13, and 19, then the RB index is $\frac{N-1}{2} - 5p + 4$, where $$\frac{9-N}{10} \leq p \leq \frac{N+7}{10}$$ and $p$ is an integer.

13. A method (900) performed by a wireless device for communicating using time division duplexing, TDD, on a first radio access technology, RAT, carrier located within a frequency band of a second RAT, the method comprising: receiving (912) a first communication on the first RAT carrier, wherein a carrier center frequency of the first RAT carrier aligns with a middle of a resource block, RB, of the second RAT, and wherein the first RAT uses a 100 kHz based channel raster and the second RAT uses a subcarrier spacing, SCS, based channel raster.

14. The method of claim 13, wherein the location of the center carrier frequency of the first RAT satisfies raster requirements of the first RAT.

15. A wireless device (110) configured to communicate using time division duplexing, TDD, on a first radio access technology, RAT, carrier located within a frequency band of a second RAT, the wireless device comprising processing circuitry (120) configured to: receive a first communication on the first RAT carrier, wherein a carrier center frequency of the first RAT carrier aligns with a middle of a resource block, RB, of the second RAT, and wherein the first RAT uses a 100 kHz based channel raster and the second RAT uses a subcarrier spacing, SCS, based channel raster.

**Patentansprüche**

1. Verfahren (1000), das von einem Netzwerkknoten durchgeführt wird, zum Kommunizieren unter Verwendung von Zeitduplex, TDD, auf einem Träger einer ersten Funkzugangstechnologie, RAT, der sich innerhalb eines Frequenzbandes einer zweiten RAT befindet, wobei das Verfahren umfasst: Senden (1012) einer ersten Kommunikation auf dem Träger der ersten RAT an eine erste drahtlose Vorrichtung, wobei eine Trägermittenfrequenz des Trägers der ersten RAT mit einer Mitte eines Ressourcenblocks, RB, der zweiten RAT übereinstimmt, und wobei die erste RAT ein Kanalraster auf der Basis von 100 kHz verwendet und die zweite RAT ein Kanalraster auf der Basis des Unterträgerabstands, SCS, verwendet.

2. Verfahren nach Anspruch 1, wobei die Position der Trägermittenfrequenz der ersten RAT Rasteranforderungen der ersten RAT erfüllt.

3. Verfahren nach einem der Ansprüche 1 bis 2, ferner umfassend: Senden (1014) einer zweiten Kommunikation auf einem Träger der zweiten RAT an eine zweite drahtlose Vorrichtung.

4. Verfahren nach einem der Ansprüche 1 bis 3, wobei die zweite RAT einen SCS von 15 kHz verwendet.

5. Verfahren nach einem der Ansprüche 1 bis 4, wobei die erste RAT ein Schmalband-Internet der Dinge, NB-IoT, ist und die zweite RAT New Radio, NR, der fünften Generation, 5G, ist.

6. Verfahren nach einem der Ansprüche 4 bis 5, wobei:

die Kanalrasterfrequenz der zweiten RAT als 15$m$ kHz ausgedrückt wird, wobei $m$ eine ganze Zahl ist;
die Ressourcenblöcke in einem Träger der zweiten RAT von 0 bis N - 1 indiziert werden, wobei N die Gesamtanzahl von Ressourcenblöcken im Träger der zweiten RAT ist;
der Ressourcenblock der zweiten RAT durch einen RB-Index aus dem mittleren RB identifiziert wird, der das Kanalraster der zweiten RAT enthält;
der RB-Index für geradzahlige Werte von N bestimmt wird, wie folgt:

wenn der Rest von $m$ geteilt durch 20 eines von 1, 8, 14 und 15 ist, dann ist der RB-Index $\frac{N}{2} - 5p$, wobei $\frac{2-N}{10} \leq p \leq \frac{N}{10}$ und $p$ eine ganze Zahl ist;

wenn der Rest von $m$ geteilt durch 20 eines von 2, 3, 9 und 16 ist, dann ist der RB-Index $\frac{N}{2} - 5p + 1$, wobei $\frac{4-N}{10} \leq p \leq \frac{N+2}{10}$ und $p$ eine ganze Zahl ist;

wenn der Rest von $m$ geteilt durch 20 eines von 4, 10, 11 und 17 ist, dann ist der RB-Index $\frac{N}{2} - 5p + 2$, wobei $\frac{6-N}{10} \leq p \leq \frac{N+4}{10}$ und $p$ eine ganze Zahl ist;

wenn der Rest von $m$ geteilt durch 20 eines von 5, 12, 18 und 19 ist, dann ist der RB-Index $\frac{N}{2} - 5p + 3$, wobei $\frac{8-N}{10} \leq p \leq \frac{N+6}{10}$ und $p$ eine ganze Zahl ist;

wenn der Rest von $m$ geteilt durch 20 eines von 0, 6, 7 und 13 ist, dann ist der RB-Index $\frac{N}{2} - 5p + 4$, wobei $\frac{10-N}{10} \leq p \leq \frac{N+8}{10}$ und $p$ eine ganze Zahl ist;

der RB-Index für ungeradzahlige Werte von N bestimmt wird, wie folgt:

wenn der Rest von $m$ geteilt durch 20 eines von 0, 1, 7 und 14 ist, dann ist der RB-Index $\frac{N-1}{2} - 5p$, wobei $\frac{1-N}{10} \leq p \leq \frac{N-1}{10}$ und $p$ eine ganze Zahl ist;

wenn der Rest von m geteilt durch 20 eines von 2, 8, 9 und 15 ist, dann ist der RB-Index $\frac{N-1}{2} - 5p + 1$, wobei $\frac{3-N}{10} \leq p \leq \frac{N+1}{10}$ und $p$ eine ganze Zahl ist;

wenn der Rest von $m$ geteilt durch 20 eines von 3, 10, 16 und 17 ist, dann ist der RB-Index

$$\frac{N-1}{2} - 5p + 2$$ , wobei $\frac{5-N}{10} \leq p \leq \frac{N+3}{10}$ und $p$ eine ganze Zahl ist;

wenn der Rest von $m$ geteilt durch 20 eines von 4, 5, 11 und 18 ist, dann ist der RB-Index $\frac{N-1}{2} - 5p + 3$

, wobei $\frac{7-N}{10} \leq p \leq \frac{N+5}{10}$ und $p$ eine ganze Zahl ist;

wenn der Rest von $m$ geteilt durch 20 eines von 6, 12, 13 und 19 ist, dann ist der RB-Index

$$\frac{N-1}{2} - 5p + 4$$ , wobei $\frac{9-N}{10} \leq p \leq \frac{N+7}{10}$ und $p$ eine ganze Zahl ist;

7. Netzwerkknoten (160), der so konfiguriert ist, dass er unter Verwendung von Zeitduplex, TDD, auf einem Träger einer ersten Funkzugangstechnologie, RAT, kommuniziert, der sich innerhalb eines Frequenzbandes einer zweiten RAT befindet, wobei der Netzwerkknoten Verarbeitungsschaltungsanordnung (170) umfasst, die konfiguriert ist zum: Senden einer ersten Kommunikation auf dem Träger der ersten RAT an eine erste drahtlose Vorrichtung, wobei eine Trägermittenfrequenz des Trägers der ersten RAT mit einer Mitte eines Ressourcenblocks, RB, der zweiten RAT übereinstimmt, und wobei die erste RAT ein Kanalraster auf der Basis von 100 kHz verwendet und die zweite RAT ein Kanalraster auf der Basis des Unterträgerabstands, SCS, verwendet.

8. Netzwerkknoten nach Anspruch 7, wobei die Position der Trägermittenfrequenz der ersten RAT Rasteranforderungen der ersten RAT erfüllt.

9. Netzwerkknoten nach einem der Ansprüche 7 bis 8, wobei die Verarbeitungsschaltungsanordnung so ausgelegt ist, dass sie eine zweite Kommunikation auf einem Träger der zweiten RAT an eine zweite drahtlose Vorrichtung sendet.

10. Netzwerkknoten nach einem der Ansprüche 7 bis 9, wobei die zweite RAT einen SCS von 15 kHz verwendet.

11. Netzwerkknoten nach einem der Ansprüche 7 bis 10, wobei die erste RAT ein Schmalband-Internet der Dinge, NB-IoT, ist und die zweite RAT New Radio, NR, der fünften Generation, 5G, ist.

12. Netzwerkknoten nach einem der Ansprüche 10 bis 11, wobei:

die Kanalrasterfrequenz der zweiten RAT als 15$m$ kHz ausgedrückt wird, wobei $m$ eine ganze Zahl ist;
die Ressourcenblöcke in einem Träger der zweiten RAT von 0 bis N - 1 indiziert werden, wobei N die Gesamtanzahl von Ressourcenblöcken im Träger der zweiten RAT ist;
der Ressourcenblock der zweiten RAT durch einen RB-Index aus dem mittleren RB identifiziert wird, der das Kanalraster der zweiten RAT enthält;
der RB-Index für geradzahlige Werte von N bestimmt wird, wie folgt:

wenn der Rest von $m$ geteilt durch 20 eines von 1, 8, 14 und 15 ist, dann ist der RB-Index $\frac{N}{2} - 5p$ , wobei

$$\frac{2-N}{10} \leq p \leq \frac{N}{10}$$ und $p$ eine ganze Zahl ist;

wenn der Rest von $m$ geteilt durch 20 eines von 2, 3, 9 und 16 ist, dann ist der RB-Index $\frac{N}{2} - 5p + 1$

$$\frac{4-N}{10} \leq p \leq \frac{N+2}{10}$$ , wobei und $p$ eine ganze Zahl ist;

wenn der Rest von $m$ geteilt durch 20 eines von 4, 10, 11 und 17 ist, dann ist der RB-Index $\frac{N}{2} - 5p + 2$

$$\frac{6-N}{10} \leq p \leq \frac{N+4}{10}$$

, wobei  und $P$ eine ganze Zahl ist;

wenn der Rest von $m$ geteilt durch 20 eines von 5, 12, 18 und 19 ist, dann ist der RB-Index $\frac{N}{2} - 5p + 3$

$$\frac{8-N}{10} \leq p \leq \frac{N+6}{10}$$

, wobei  und $p$ eine ganze Zahl ist;

wenn der Rest von $m$ geteilt durch 20 eines von 0, 6, 7 und 13 ist, dann ist der RB-Index $\frac{N}{2} - 5p + 4$

$$\frac{10-N}{10} \leq p \leq \frac{N+8}{10}$$

, wobei  und $p$ eine ganze Zahl ist;

der RB-Index für ungeradzahlige Werte von N bestimmt wird, wie folgt:

wenn der Rest von $m$ geteilt durch 20 eines von 0, 1, 7 und 14 ist, dann ist der RB-Index $\frac{N-1}{2} - 5p$

$$\frac{1-N}{10} \leq p \leq \frac{N-1}{10}$$

, wobei  und $p$ eine ganze Zahl ist;

wenn der Rest von $m$ geteilt durch 20 eines von 2, 8, 9 und 15 ist, dann ist der RB-Index $\frac{N-1}{2} - 5p + 1$ , wobei $\frac{3-N}{10} \leq p \leq \frac{N+1}{10}$  und $p$ eine ganze Zahl ist;

wenn der Rest von $m$ geteilt durch 20 eines von 3, 10, 16 und 17 ist, dann ist der RB-Index $\frac{N-1}{2} - 5p + 2$ , wobei $\frac{5-N}{10} \leq p \leq \frac{N+3}{10}$  und $p$ eine ganze Zahl ist;

wenn der Rest von $m$ geteilt durch 20 eines von 4, 5, 11 und 18 ist, dann ist der RB-Index $\frac{N-1}{2} - 5p + 3$ , wobei $\frac{7-N}{10} \leq p \leq \frac{N+5}{10}$  und $P$ eine ganze Zahl ist;

wenn der Rest von $m$ geteilt durch 20 eines von 6, 12, 13 und 19 ist, dann ist der RB-Index $\frac{N-1}{2} - 5p + 4$ , wobei $\frac{9-N}{10} \leq p \leq \frac{N+7}{10}$  und $p$ eine ganze Zahl ist;

13. Verfahren (900), das von einer drahtlosen Vorrichtung durchgeführt wird, zum Kommunizieren unter Verwendung von Zeitduplex, TDD, auf einem Träger einer ersten Funkzugangstechnologie, RAT, der sich innerhalb eines Frequenzbandes einer zweiten RAT befindet, wobei das Verfahren umfasst:
Empfangen (912) einer ersten Kommunikation auf dem Träger der ersten RAT, wobei eine Trägermittenfrequenz des Trägers der ersten RAT mit einer Mitte eines Ressourcenblocks, RB, der zweiten RAT übereinstimmt, und wobei die erste RAT ein Kanalraster auf der Basis von 100 kHz verwendet und die zweite RAT ein Kanalraster auf der Basis des Unterträgerabstands, SCS, verwendet.

14. Verfahren nach Anspruch 13, wobei die Position der Trägermittenfrequenz der ersten RAT Rasteranforderungen der ersten RAT erfüllt.

15. Drahtlose Vorrichtung (110), die so konfiguriert ist, dass sie unter Verwendung von Zeitduplex, TDD, auf einem Träger einer ersten Funkzugangstechnologie, RAT, kommuniziert, der sich innerhalb eines Frequenzbandes einer zweiten RAT befindet, wobei die drahtlose Vorrichtung Verarbeitungsschaltungsanordnung (120) umfasst, die konfiguriert ist zum:
Empfangen einer ersten Kommunikation auf dem Träger der ersten RAT, wobei eine Trägermittenfrequenz des Trägers der ersten RAT mit einer Mitte eines Ressourcenblocks, RB, der zweiten RAT übereinstimmt, und wobei die erste RAT ein Kanalraster auf der Basis von 100 kHz verwendet und die zweite RAT ein Kanalraster auf der Basis des Unterträgerabstands, SCS, verwendet.

**Revendications**

1. Procédé (1000) réalisé par un noeud de réseau pour communiquer à l'aide d'un duplexage par répartition dans le temps, TDD, sur une porteuse de première technologie d'accès radio, RAT, située dans une bande de fréquences d'une deuxième RAT, le procédé comprenant :
la transmission (1012) d'une première communication sur la porteuse de première RAT à un premier dispositif sans fil, dans lequel une fréquence centrale de porteuse de la porteuse de première RAT s'aligne sur un milieu d'un bloc de ressources, RB, de la deuxième RAT, et dans lequel la première RAT utilise une grille de canaux basée sur 100 kHz et la deuxième RAT utilise une grille de canaux basée sur espacement de sous-porteuses, SCS.

2. Procédé selon la revendication 1, dans lequel l'emplacement de la fréquence centrale de porteuse de la première RAT satisfait des exigences de grille de la première RAT.

3. Procédé selon l'une quelconque des revendications 1 et 2, comprenant en outre :
la transmission (1014) d'une deuxième communication sur une porteuse de la deuxième RAT à un deuxième dispositif sans fil.

4. Procédé selon l'une quelconque des revendications 1 à 3, dans lequel la deuxième RAT utilise SCS à 15 kHz.

5. Procédé selon l'une quelconque des revendications 1 à 4, dans lequel la première RAT est l'Internet des objets à bande étroite, NB-IoT, et la deuxième RAT est nouvelle radio, NR, de cinquième génération, 5G.

6. Procédé selon l'une quelconque des revendications 4 et 5, dans lequel :

la fréquence de grille de canaux de deuxième RAT est exprimée par $15m$ kHz, où $m$ est un nombre entier ;
les blocs de ressources dans une porteuse de la deuxième RAT sont indexés de 0 à N-1, où N est le nombre total de blocs de ressources dans la porteuse de la deuxième RAT ;
le bloc de ressources de la deuxième RAT est identifié par un indice RB du RB de milieu qui contient la grille de canaux de deuxième RAT ;
pour des valeurs paires de N, l'indice RB est déterminé comme suit :

lorsque le reste de $m$ divisé par 20 est l'un parmi 1, 8, 14 et 15, alors l'indice RB est $\frac{N}{2} - 5p$, où $\frac{2-N}{10} \leq p \leq \frac{N}{10}$ et $p$ est un nombre entier ;

lorsque le reste de $m$ divisé par 20 est l'un parmi 2, 3, 9 et 16, alors l'indice RB est $\frac{N}{2} - 5p + 1$, où $\frac{4-N}{10} \leq p \leq \frac{N+2}{10}$ et $p$ est un nombre entier ;

lorsque le reste de $m$ divisé par 20 est l'un parmi 4, 10, 11 et 17, alors l'indice RB est $\frac{N}{2} - 5p + 2$, où $\frac{6-N}{10} \leq p \leq \frac{N+4}{10}$ et $p$ est un nombre entier ;

lorsque le reste de $m$ divisé par 20 est l'un parmi 5, 12, 18 et 19, alors l'indice RB est $\frac{N}{2} - 5p + 3$, où $\frac{8-N}{10} \leq p \leq \frac{N+6}{10}$ et $p$ est un nombre entier ;

lorsque le reste de $m$ divisé par 20 est l'un parmi 0, 6, 7 et 13, alors l'indice RB est $\frac{N}{2} - 5p + 4$, où $\frac{10-N}{10} \leq p \leq \frac{N+8}{10}$ et $p$ est un nombre entier ;
pour des valeurs impaires de N, l'indice RB est déterminé comme suit :

lorsque le reste de $m$ divisé par 20 est l'un parmi 0, 1, 7 et 14, alors l'indice RB est $\frac{N-1}{2} - 5p$, où

$$\frac{1-N}{10} \leq p \leq \frac{N-1}{10}$$ et *p* est un nombre entier ;

lorsque le reste de *m* divisé par 20 est l'un parmi 2, 8, 9 et 15, alors l'indice RB est $$\frac{N-1}{2} - 5p + 1$$, où $$\frac{3-N}{10} \leq p \leq \frac{N+1}{10}$$ et *p* est un nombre entier ;

lorsque le reste de *m* divisé par 20 est l'un parmi 3, 10, 16 et 17, alors l'indice RB est $$\frac{N-1}{2} - 5p + 2$$, où $$\frac{5-N}{10} \leq p \leq \frac{N+3}{10}$$ et *p* est un nombre entier ;

lorsque le reste de *m* divisé par 20 est l'un parmi 4, 5, 11 et 18, alors l'indice RB est $$\frac{N-1}{2} - 5p + 3$$, où $$\frac{7-N}{10} \leq p \leq \frac{N+5}{10}$$ et *p* est un nombre entier ; et

lorsque le reste de *m* divisé par 20 est l'un parmi 6, 12, 13 et 19, alors l'indice RB est $$\frac{N-1}{2} - 5p + 4$$, où $$\frac{9-N}{10} \leq p \leq \frac{N+7}{10}$$ et *p* est un nombre entier.

**7.** Noeud de réseau (160) configuré pour communiquer à l'aide d'un duplexage par répartition dans le temps, TDD, sur une porteuse de première technologie d'accès radio, RAT, située dans une bande de fréquences d'une deuxième RAT, le noeud de réseau comprenant une circuiterie de traitement (170) configurée pour :
transmettre une première communication sur la porteuse de première RAT à un premier dispositif sans fil, dans lequel une fréquence centrale de porteuse de la porteuse de première RAT s'aligne sur un milieu d'un bloc de ressources, RB, de la deuxième RAT, et dans lequel la première RAT utilise une grille de canaux basée sur 100 kHz et la deuxième RAT utilise une grille de canaux basée sur espacement de sous-porteuses, SCS.

**8.** Noeud de réseau selon la revendication 7, dans lequel l'emplacement de la fréquence centrale de porteuse de la première RAT satisfait des exigences de grille de la première RAT.

**9.** Noeud de réseau selon l'une quelconque des revendications 7 et 8, la circuiterie de traitement étant en outre exploitable pour transmettre une deuxième communication sur une porteuse de la deuxième RAT à un deuxième dispositif sans fil.

**10.** Noeud de réseau selon l'une quelconque des revendications 7 à 9, dans lequel la deuxième RAT utilise SCS à 15 kHz.

**11.** Noeud de réseau selon l'une quelconque des revendications 7 à 10, dans lequel la première RAT est l'Internet des objets à bande étroite, NB-IoT, et la deuxième RAT est nouvelle radio, NR, de cinquième génération, 5G.

**12.** Noeud de réseau selon l'une quelconque des revendications 10 et 11, dans lequel :

la fréquence de grille de canaux de deuxième RAT est exprimée par 15*m* kHz, où *m* est un nombre entier ;
les blocs de ressources dans une porteuse de la deuxième RAT sont indexés de 0 à N-1, où N est le nombre total de blocs de ressources dans la porteuse de la deuxième RAT ;
le bloc de ressources de la deuxième RAT est identifié par un indice RB du RB de milieu qui contient la grille de canaux de deuxième RAT ;
pour des valeurs paires de N, l'indice RB est déterminé comme suit :

lorsque le reste de *m* divisé par 20 est l'un parmi 1, 8, 14 et 15, alors l'indice RB est $$\frac{N}{2} - 5p$$, où $$\frac{2-N}{10} \leq p \leq \frac{N}{10}$$ et *p* est un nombre entier ;

lorsque le reste de *m* divisé par 20 est l'un parmi 2, 3, 9 et 16, alors l'indice RB est $$\frac{N}{2} - 5p + 1$$, où

$$\frac{4-N}{10} \leq p \leq \frac{N+2}{10}$$ et $p$ est un nombre entier ;

lorsque le reste de $m$ divisé par 20 est l'un parmi 4, 10, 11 et 17, alors l'indice RB est $\frac{N}{2} - 5p + 2$, où $$\frac{6-N}{10} \leq p \leq \frac{N+4}{10}$$ et $p$ est un nombre entier ;

lorsque le reste de $m$ divisé par 20 est l'un parmi 5, 12, 18 et 19, alors l'indice RB est $\frac{N}{2} - 5p + 3$, où $$\frac{8-N}{10} \leq p \leq \frac{N+6}{10}$$ et $p$ est un nombre entier ;

lorsque le reste de $m$ divisé par 20 est l'un parmi 0, 6, 7 et 13, alors l'indice RB est $\frac{N}{2} - 5p + 4$, où $$\frac{10-N}{10} \leq p \leq \frac{N+8}{10}$$ et $p$ est un nombre entier ;

pour des valeurs impaires de N, l'indice RB est déterminé comme suit :

lorsque le reste de $m$ divisé par 20 est l'un parmi 0, 1, 7 et 14, alors l'indice RB est $\frac{N-1}{2} - 5p$, où $$\frac{1-N}{10} \leq p \leq \frac{N-1}{10}$$ et $p$ est un nombre entier ;

lorsque le reste de $m$ divisé par 20 est l'un parmi 2, 8, 9 et 15, alors l'indice RB est $\frac{N-1}{2} - 5p + 1$, où $$\frac{3-N}{10} \leq p \leq \frac{N+1}{10}$$ et $p$ est un nombre entier ;

lorsque le reste de $m$ divisé par 20 est l'un parmi 3, 10, 16 et 17, alors l'indice RB est $\frac{N-1}{2} - 5p + 2$, où $$\frac{5-N}{10} \leq p \leq \frac{N+3}{10}$$ et $p$ est un nombre entier ;

lorsque le reste de $m$ divisé par 20 est l'un parmi 4, 5, 11 et 18, alors l'indice RB est $\frac{N-1}{2} - 5p + 3$, où $$\frac{7-N}{10} \leq p \leq \frac{N+5}{10}$$ et $p$ est un nombre entier ; et

lorsque le reste de $m$ divisé par 20 est l'un parmi 6, 12, 13 et 19, alors l'indice RB est $\frac{N-1}{2} - 5p + 4$, où $$\frac{9-N}{10} \leq p \leq \frac{N+7}{10}$$ et $p$ est un nombre entier.

13. Procédé (900) réalisé par un dispositif sans fil pour communiquer à l'aide d'un duplexage par répartition dans le temps, TDD, sur une porteuse de première technologie d'accès radio, RAT, située dans une bande de fréquences d'une deuxième RAT, le procédé comprenant:
la réception (912) d'une première communication sur la porteuse de première RAT, dans lequel une fréquence centrale de porteuse de la porteuse de première RAT s'aligne sur un milieu d'un bloc de ressources, RB, de la deuxième RAT, et dans lequel la première RAT utilise une grille de canaux basée sur 100 kHz et la deuxième RAT utilise une grille de canaux basée sur espacement de sous-porteuses, SCS.

14. Procédé selon la revendication 13, dans lequel l'emplacement de la fréquence centrale de porteuse de la première RAT satisfait des exigences de grille de la première RAT.

15. Dispositif sans fil (110) configuré pour communiquer à l'aide d'un duplexage par répartition dans le temps, TDD, sur une porteuse de première technologie d'accès radio, RAT, située dans une bande de fréquences d'une deuxième RAT, le dispositif sans fil comprenant une circuiterie de traitement (120) configurée pour:
recevoir une première communication sur la porteuse de première RAT, dans lequel une fréquence centrale de porteuse de la porteuse de première RAT s'aligne sur un milieu d'un bloc de ressources, RB, de la deuxième RAT, et dans lequel la première RAT utilise une grille de canaux basée sur 100 kHz et la deuxième RAT utilise une grille de canaux basée sur espacement de sous-porteuses, SCS.

15 kHz

Frequency

**Raster step in NR**

100 kHz

Frequency

**Raster step in NB-IoT**

Fig. 1

Possible location
for NR or LTE
channel raster

100 kHz

Raster grid with
100 kHz step

Frequency

Fig. 2

| NR RB | RB center | NR RB | NR RB |

NB-IoT

Fig. 3

NR raster

Middle NR RB that contains raster

• • •

NR RB with index $q$ relative to the middle RB

$(q + 1)$ RBs

Fig. 4

EP 3 949 223 B1

NR raster on $15m$ [kHz]

Subcarrier
index $\longrightarrow$ 0          5    6                    11

RB center

7.5 kHz

82.5 kHz

Fig. 5

Fig. 6

Fig. 7

# Fig. 8

900

912 – receive a first communication on the first RAT carrier, wherein a carrier center frequency of the first RAT carrier aligns with a middle of a resource block (RB) of a second RAT

914 – transmit a second communication on the first RAT carrier

Fig. 9

EP 3 949 223 B1

1000

1012 – transmit a first communication on the first RAT carrier to a first wireless device, wherein a carrier center frequency of the first RAT carrier aligns with a middle of a resource block (RB) of a second RAT

1014 – transmit a second communication on a carrier of the second RAT to a second wireless device

Fig. 10

EP 3 949 223 B1

Fig. 11

EP 3 949 223 B1

Fig. 12

Fig. 13

Fig. 14

EP 3 949 223 B1

```
┌─────────────────────────┐         ┌─ ─ ─ ─ ─ ─ ─ ─ ─ ─ ─ ─ ─┐
│          610            │         │          611            │
│  Host computer provides │ ──────▶ │  Host computer executes │
│        user data        │         │    client application   │
└─────────────────────────┘         └─ ─ ─ ─ ─ ─ ─ ─ ─ ─ ─ ─ ─┘
             │
             ▼
┌─────────────────────────┐
│          620            │
│  Host computer initiates │
│   transmission carrying  │
│  the user data to the UE │
└─────────────────────────┘
             │
             ▼
┌─ ─ ─ ─ ─ ─ ─ ─ ─ ─ ─ ─ ─┐
│          630            │
│   Base station transmits │
│       the user data      │
└─ ─ ─ ─ ─ ─ ─ ─ ─ ─ ─ ─ ─┘
             │
             ▼
┌─ ─ ─ ─ ─ ─ ─ ─ ─ ─ ─ ─ ─┐
│          640            │
│    UE executes client    │
│       application        │
└─ ─ ─ ─ ─ ─ ─ ─ ─ ─ ─ ─ ─┘
```

Fig. 15

```
┌─────────────────────────┐
│          710            │
│  Host computer provides │
│        user data        │
└─────────────────────────┘
             │
             ▼
┌─────────────────────────┐
│          720            │
│  Host computer initiates │
│   transmission carrying  │
│  the user data to the UE │
└─────────────────────────┘
             │
             ▼
┌─ ─ ─ ─ ─ ─ ─ ─ ─ ─ ─ ─ ─┐
│          730            │
│   UE receives the user   │
│          data            │
└─ ─ ─ ─ ─ ─ ─ ─ ─ ─ ─ ─ ─┘
```

Fig. 16

```
┌ ─ ─ ─ ─ ─ ─ ─ ─ ─ ─ ─ ┐       ┌ ─ ─ ─ ─ ─ ─ ─ ─ ─ ─ ─ ┐
│         810          │       │         811          │
│ UE receives input data│ ─ ─ ▶ │  UE executes client  │
│  provided at host    │       │      application      │
│      computer        │       │                      │
└ ─ ─ ─ ─ ─ ─┬─ ─ ─ ─ ─ ┘       └ ─ ─ ─ ─ ─ ─ ─ ─ ─ ─ ─ ┘
             │
             ▼
┌ ─ ─ ─ ─ ─ ─ ─ ─ ─ ─ ─ ┐       ┌ ─ ─ ─ ─ ─ ─ ─ ─ ─ ─ ─ ┐
│         820          │       │         821          │
│  UE provides user data│ ─ ─ ▶ │  UE executes client  │
│                      │       │      application      │
└ ─ ─ ─ ─ ─ ─┬─ ─ ─ ─ ─ ┘       └ ─ ─ ─ ─ ─ ─ ─ ─ ─ ─ ─ ┘
             │
             ▼
┌ ─ ─ ─ ─ ─ ─ ─ ─ ─ ─ ─ ┐
│         830          │
│ UE initiates transmission│
│ of the user data to the │
│    host computer     │
└ ─ ─ ─ ─ ─ ─┬─ ─ ─ ─ ─ ┘
             │
             ▼
┌───────────────────────┐
│         840          │
│ Host computer receives│
│ user data transmitted │
│    from the UE       │
└───────────────────────┘
```

Fig. 17

```
┌ ─ ─ ─ ─ ─ ─ ─ ─ ─ ─ ─ ┐
│         910          │
│ Base station receives │
│  user data from UE   │
└ ─ ─ ─ ─ ─ ─┬─ ─ ─ ─ ─ ┘
             │
             ▼
┌ ─ ─ ─ ─ ─ ─ ─ ─ ─ ─ ─ ┐
│         920          │
│ Base station initiates│
│ transmission of user  │
│ data to the host     │
│    computer          │
└ ─ ─ ─ ─ ─ ─┬─ ─ ─ ─ ─ ┘
             │
             ▼
┌───────────────────────┐
│         930          │
│ Host computer receives│
│    the user data     │
└───────────────────────┘
```

Fig. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NOKIA et al.** Coexistence of NB-IoT with NR. *3GPP DRAFT R1-1901966,* 15 February 2019